# EUROPÄISCHE PATENTANMELDUNG

(11) **EP 3 587 467 A1**
(43) Veröffentlichungstag der Anmeldung: **01.01.2020**
(21) Anmeldenummer: 18179544.4
(22) Anmeldetag: 25.06.2018
(51) Int. Cl.: C08G 18/75, C08G 18/80, C08G 18/32

(54) **FUNKTIONELLE MEHRWANDIGE KERN-SCHALE-PARTIKEL**

(71) Anmelder: Rudolf GmbH, 82538 Geretsried (DE)
(72) Erfinder: NAWROTH, Jonas, 82515 Wolfratshausen (DE); SIELEMANN, Dirk, 82515 Wolfratshausen (DE); DUSCHEK, Gunther, 83671 Benediktbeuern (DE)
(74) Vertreter: Weickmann & Weickmann PartmbB

(57) **Zusammenfassung**

Die vorliegende Erfindung betrifft Kern-Schale-Partikel umfassend einen Kern, der mindestens eine lipophile Verbindung umfasst und eine Schale, die mindestens eine kernnahe Schicht und eine kernferne Schicht umfasst. Die Erfindung betrifft ferner die Herstellung solcher Kern-Schale-Partikel und deren Verwendung, insbesondere zur Ausrüstung von Fasern und Textilien.

## Beschreibung

Die vorliegende Erfindung betrifft Kern-Schale-Partikel umfassend einen Kern, der mindestens eine lipophile Verbindung umfasst und eine Schale, die mindestens eine kernnahe Schicht und eine kernferne Schicht umfasst. Die Erfindung betrifft ferner die Herstellung solcher Kern-Schale-Partikel und deren Verwendung, insbesondere zur Ausrüstung von Fasern und Textilien.

Die Mikroverkapselung von lipophilen Verbindungen ist bekannt: Dabei werden die meist flüssigen oder festen Verbindungen in kleinsten Portionen mit einer Hülle umgeben und so immobilisiert. Die Bildung der Hülle wird üblicherweise durch Koazervierung, Glanzflächenreaktionen oder in situ Polymerisationstechniken erzeugt. Üblicherweise wird hierzu die zu verkapselnde Verbindung in einem flüssigen Medium dispergiert und die Hülle an der Grenzfläche zwischen Verbindung und Medium gebildet. Besonderes Augenmerk galt bislang Melamin-Formaldehyd-Mikrokapseln. Wie oben beschrieben, wird zumächst eine Dispersion aus Medium und zu verkapselnder Verbindung erzeugt, der ein Melamin-Formaldehyd-Präpolymer zugesetzt wird. Das Präpolymer härtet an der Grenzfläche aus und bildet eine feste undurchlässige Hülle mit mechanisch akzeptablen Eigenschaften. Da sich aus den Kondensaten bekanntermaßen Formaldehyd freisetzen kann, verlieren Melamin-Formaldehyd-Mikrokapseln aus gesundheitlichen Gründen immer mehr an Bedeutung.

EP 1 246 693 schlägt die Zugabe von Melamin während der Härtungsphase der Melamin-Formaldehyd-Harzhülle vor, um die nachträgliche FormaldehydFreisetzung zu reduzieren.

Aus DE 2 242 910 ist bekannt, dass eine Hülle aus Polyharnstoff durch eine Grenzflächenreaktion von Polyisocyanaten mit Polyaminen hergestellt werden kann.

EP 1 029 018 beschreibt die Ausbildung von Kapselwänden durch Polymerisation von Acrylaten. Versuche wurden unternommen, um die Hülle zusätzlich zu funktionalisieren.

Auf Basis der oben beschriebenen Systeme ist eine Funktionalisierung entweder nicht möglich oder beeinflusst negativ die Hüllenmorphologie, z.B. durch Bildung von Poren, Kanälen, etc.

So ist aus WO 2012/075293 bekannt, dass es bei einer Polymerisation des polaren Momomers N,N-Dimethylaminoethylmethacrylat zur Ausbildung von Hydrogelstrukturen kommt. Beim Quellen entstehen somit Kanäle und Poren, die das Ausdiffundieren der Wirksubstanz des Kerns begünstigen.

US 8,747,999 beschreibt einen Kern-Schale-Partikel, dessen Schale durch simultane Reaktion eines Melamin-Formaldehyd-Harzes mit einem Diallyldimethylammoniumchlorid-Copolymer hergestellt wird. Die Schale trägt somit funktionelle Gruppen in Form von kationischen Einheiten und reaktiven Methylolfunktionen. Die Schale kann allerdings nicht beliebig hoch funktionalisiert werden, da dies zwangsläufig zur Störung der Schalenstruktur führt.

EP 2 043 773 offenbart die nachträgliche Funktionalisierung eines Kern-Schale-Partikels durch Beschichtung mit einem Polyelektrolyten.

Ferner werden im Stand der Technik Mikroverkapselungen beschrieben, bei denen mehr als zwei Hüllen um den Kern gebildet werden.

WO 2013/182855 offenbart einen Kern-Schale-Partikel mit zwei übereinander angeordneten Polyharnstoffhüllen als Schale. Durch die doppelte Verkapselung kann die Permeabilität reduziert werden. Das Aufbringen der zweiten Polyharnstoffhülle auf die erste Polyharnstoffhülle ist jedoch kompliziert und bedarf zusätzlicher Chemikalien.

US 8,329,233 beschreibt Kern-Schale-Partikel, die eine Melamin-Formaldehyd-Hülle aufweisen, welche wiederum mit einer Polyacrylat-Hülle überzogen ist. Durch die äußere Polyacrylat-Hülle soll die Freisetzung von Formaldehyd verhindert werden. Die potentielle Gefahr der Formaldehydfreisetzung kann jedoch nicht ausgeschlossen werden.

EP 1 513 610 offenbart einen Kern-Schale-Partikel mit Doppelwandstruktur mit dem Ziel die Permeabilität zu verringern. Die Hüllen aus Polyurethan und Polyharnstoff sind miteinander vernetzt, wodurch Fehlstellen in den jeweiligen Hüllen entstehen können.

US 7,025,912 beschreibt einen Kern-Schale-Partikel mit Doppelwandstruktur, dessen innere Hülle aus Polyharnstoff besteht und dessen äußere Hülle auf Basis ethylenisch ungesättigter Monomere aufgebaut ist. In der Polyharnstoffhülle sind ethylenisch ungesättigte Tenside eingebettet, die als Ankerpunkt für die zweite Hülle dienen. Durch die Verwendung der Tenside kann es zu Störungen, z.B. Poren oder Kanäle, in der Polyharnstoffhülle kommen. Darüber hinaus ist die innere Polyharnstoffhülle nicht ausreichend kompatibel mit dem Kernmaterial.

In Hinblick auf den Stand der Technik war es Aufgabe der vorliegenden Erfindung eine lipophile Verbindung zu verkapseln. Die Schale der Kapsel sollte einerseits inert gegenüber der lipophilen Verbindung sein. Ferner sollten die Eigenschaften der Schale, z.B. die Permeabilität, mechanische Festigkeit, Funktionalität, etc., variabel und reproduzierbar einstellbar sein. Unter Funktionalität wird im Folgenden insbesondere die Modifizierung der Schale mit funktionellen, insbesondere funktionellen chemischen, Gruppen verstanden. Überraschenderweise hat sich gezeigt, dass die Aufgabe durch den erfindungsgemäßen Kern-Schale-Partikel gelöst wird, der (a) einen Kern umfassend mindestens eine lipophile Verbindung und (b) eine Schale umfassend mindestens eine kernnahe Schicht und eine kernferne Schicht, umfasst.

Der Aggregatszustand des Kerns kann gasförmig, fest oder flüssig sein, bevorzugt ist der Kern bei Raumtemperatur (20 °C) fest. In einer anderen bevorzugten Ausführungsform ist der Kern bei Raumtemperatur (20 °C) flüssig und kann auch in Form einer Lösung, Emulsion oder Suspension bei dieser Temperatur vorliegen. In einer bevorzugten Ausführungsform umfasst der Kern mindestens 80 Gew.-%, stärker bevorzugt mindestens 90 bis 99 Gew.-% der mindestens einen lipophilen Verbindung (bezogen auf die Gesamtmasse des Kerns). In einer bevorzugten Ausführungsform besteht der Kern aus mindestens einer lipophilen Verbindung.

In einer bevorzugten Ausführungsform weist die lipophile Verbindung bei 20 °C eine Wasserlöslichkeit von <10 g/l, stärker bevorzugt <5 g/l, noch stärker bevorzugt <3 g/l auf.

Bevorzugte lipophile Verbindungen, die ggf. in einem Trägeröl aufgeschlämmt sein können, sind ausgewählt aus Pigmenten, Farbstoffen, Duftstoffen, Kosmetika, Flammschutzmitteln, Latentwärmespeichermaterialien, Bioziden, Katalysatoren, Klebstoffen, Klebstoffkomponenten, Hydrophobiermitteln, Polymerbausteinen, Isocyanaten, Ölen, Silikonölen, Wachsen oder Mischungen davon. Geeignete Trägeröle sind beispielsweise Mono-, Di-, oder Triglycerid, Mineralöl, Silikonöl, Rizinusöl und Isopropylmyristat, oder Mischungen davon.

Latentwärmespeichermaterialien bezeichnen Stoffe, die einen Phasenübergang aufweisen. Der Phasenübergang sollte im Bereich der jeweiligen Anwendungstemperatur stattfinden, bevorzugt handelt es sich bei dem verwendeten Latentwärmespeichermaterial um einen Stoff, der einen fest/flüssig-Phasenübergang im Temperaturbereich von -20 bis 120 °C besitzt. Latentwärmespeichermaterialien für Bekleidungsmaterialien weisen typischerweise einen Phasenübergang zwischen 15 und 35 °C auf.

Geeignete Latentwärmespeichermaterialien sind bevorzugt ausgewählt aus
- gesättigtem oder ungesättigtem, linearem, verzweigtem oder zyklischem Kohlenwasserstoff, bevorzugt gesättigtem oder ungesättigtem, linearem, verzweigtem oder zyklischem C₁₀-C₄₀-Kohlenwasserstoff, stärker bevorzugt linearem oder zyklischem C₁₀-C₄₀-Alkan und aromatischem C₆-C₂₀ Kohlenwasserstoff, am stärksten bevorzugt n-Hexadecan, n-Heptadecan, n-Octadecan, n-Nonadecan, n-Eicosan, Cyclohexan, Cyclooctan, Cyclodecan, Benzol, Naphthalin, Biphenyl,
- gesättigter oder ungesättigter C₆-C₃₀-Fettsäure, gesättigtem oder ungesättigtem C₆-C₃₀-Fettalkohol und gesättigtem oder ungesättigtem C₆-C₃₀-Fettsäure-C₁-C₁₀-Alkyl-ester, bevorzugt Laurin-, Stearin-, ÖI- oder Behensäure, Lauryl-, Stearyl- oder Oleylalkohol, Propylpalmitat, Methylstearat oder Methylpalmitat, und
- Mischungen davon.

Farbstoffe können ausgewählt sein aus Reaktivfarbstoff, wie z.B. C.I. Reactive Red 2, Dispersionsfarbstoff, wie z.B. C.I. Disperse Yellow 42, Säurefarbstoff, wie z.B. C.I. Acid Blue 1, oder basischem Farbstoff, wie z.B. C.I. Basic Violet 3 und Mischungen davon.

Pigmente sind farbgebende Substanzen, die im Anwendungsmedium, z.B. Ölen, praktisch unlöslich sind. Bevorzugte Pigmente sind entweder anorganische oder organische Pigmente. Pigmente können auch nach ihren optischen Eigenschaften (spezifische Farbe) und nach ihren technischen Eigenschaften (Korrosionsschutz, Magnetismus) eingeteilt werden. In letzterem Fall sind Farbpigmente, magnetische Pigmente und Mischungen davon bevorzugt.

Duftstoffe gemäß der vorliegenden Erfindung können synthetischer oder natürlicher Natur sein. Natürliche Duftstoffe umfassen z.B. ölige Blüten- und/oder Fruchtrindenextrakte oder ätherische Öle. Synthetische Duftstoffe umfassen beispielsweise Ester, Ether oder Aldehyde.

Die eingesetzten Flammschutzmittel sind bevorzugt halogenierte Flammschutzmittel, stärker bevorzugt Tetrabromobisphenol A (TBA), Bromopolystyrol, chlorierte Paraffine und Dibromoneopentylglycol (DBNPG), phosphathaltige Flammschutzmittel, stärker bevorzugt organische Phosphorsäureester oder cyclische Phosphatderivate, oder Mischungen davon.

Biozide gemäß der vorliegenden Erfindung sind bevorzugt ausgewählt aus Pestiziden, Fungiziden, Herbiziden, Insektiziden, Algiziden, Molluskiziden, Akariziden, Rodentiziden, Bakteriziden, Antibiotika, Antiseptika, antibakteriellen, antiviralen, antifungalen, antiparasitären Bioziden und Mischungen davon.

Kosmetika sind bevorzugt ausgewählt aus Antifaltenmitteln, Radikalfängern, Selbstbräunern und/oder Massageölen.

Als Katalysatoren können unter anderen *N,N*'-Dimethylaminoethanol, *N,N'-*Dimethylcyclohexylamin, Zinn(II)-2-ethylhexanoat, Dibutylzinndilaurat und Mischungen davon verwendet werden.

Klebstoffe und Klebstoffkomponenten umfassen beispielsweise Einkomponenten- und Zweikomponentensysteme z.B. auf Basis von lipophilen Isocyanaten, Polyolen, Polyaminen Carbodiimiden, zinnorganischen Verbindungen, Acrylaten und/oder Epoxiden.

Geeignete Öle umfassen bevorzugt natürliche oder synthetische Öle. Bevorzugt sind Aliphaten, wie gesättigte, ungesättigte und/oder cyclische Kohlenwasserstoffe, aromatische Kohlenwasserstoffe, wie z.B. Benzol, Xylol, Naphthalin und/oder Toluol, Pflanzenöle, wie z.B. Sojaöl, Olivenöl und/oder Rapsöl, Silikonöle, sowie Mischungen davon.

Geeignete Wachse umfassen beispielsweise Polyolefinwachse wie z.B. Polyethylenwachs, Carnaubawachs, Polyvinyletherwachs, und Mischungen davon.

In einer bevorzugten Ausführungsform umfasst die Schale eine kernnahe Schicht und eine kernferne Schicht. In einer bevorzugten Ausführungsform besteht die Schale im Wesentlichen aus einer kernnahen und einer kernfernen Schicht. In einer bevorzugten Ausführungsform besteht die Schale aus einer kernnahen Schicht und einer kernfernen Schicht und gegebenenfalls Hilfsmitteln.

In einer bevorzugten Ausführungsform ist jeweils die kernferne und/oder die kernnahe Schicht, insbesondere die kernferne und die kernnahe Schicht, kovalent vernetzt.

In einer bevorzugten Ausführungsform umgibt die kernnahe Schicht direkt den Kern.

In einer bevorzugten Ausführungsform ist die kernferne Schicht auf der kernnahen Schicht angeordnet, d.h. zwischen kernferner Schicht und kernnaher Schicht ist insbesondere keine zusätzliche kovalent-vernetzte Schicht angeordnet.

In einer bevorzugten Ausführungsform sind die - gegebenenfalls kovalent vernetzte - kernnahe Schicht und die - gegebenenfalls kovalent vernetzte - kernferne Schicht miteinander nicht kovalent verbunden.

Die kernferne und/oder kernnahe Schicht sind/ist bevorzugt ein Polymer, insbesondere ein vernetztes Polymer, zum Beispiel auf Basis eines Polyolefins, Polyacrylats, Polyurethans, das ggf. auch eine oder mehrere Allophanat-, Carbodiimid-, Isocyanurat-, Biuret-, Uretduion-, Harnstoff-, Iminooxadiazindion- und/oder Uretonimin-Gruppen enthalten kann, Polyallophanats, Polycarbodiimids, Polyisocyanurats, Polybiurets, Polyuretdions, Polyharnstoffs, Polyiminooxadiazindions, Polyuretonimins, Epoxidharz, Vinylpolymers, Allylpolymers, insbesondere auf Basis eines Polyacrylats, oder eines Polyurethans.

Bevorzugt ist die kernnahe Schicht auf Basis eines Polymers mindestens eines ethylenisch ungesättigten Monomers, insbesondere eines vernetzten Polyacrylat-Polymers. Die kernferne Schicht ist bevorzugt auf Basis eines Polyurethans, das ggf. auch eine oder mehrere Allophanat-, Carbodiimid-, Isocyanurat-, Biuret-, Uretduion-, Harnstoff-, Iminooxadiazindion- und/oder Uretonimin-Gruppen enthalten kann, Polyallophanats, Polycarbodiimids, Polyisocyanurats, Polybiurets, Polyuretdions, Polyharnstoffs, Polyiminooxadiazindions, und/oder Polyuretonimins, insbesondere auf Basis eines vernetzten Polyurethans und Polyharnstoffs.

Bevorzugt ist die kernnahe Schicht inert gegenüber dem Kern. Weiterhin bevorzugt enthält die kernnahe Schicht keine funktionellen Gruppen, insbesondere keine funktionellen Gruppen, die eine kovalente Verbindung mit der kernfernen Schicht ermöglichen.

In einer bevorzugten Ausführungsform ist die kernnahe Schicht erhältlich durch Polymerisation von mindestens einem Monomer mit mindestens einer ethylenisch ungesättigten Gruppe. Besonders bevorzugt ist die kernnahe Schicht erhältlich durch Polymerisation von mindestens einem Monomer mit monoethylenisch ungesättigter Gruppe und mindestens einem Monomer mit polyethylenisch ungesättigter Gruppe.

Bevorzugte ethylenisch ungesättigte Gruppen sind Vinyl-, Vinylether-, Acryl-, C₁-C₆-Alkylacryl-, Allyl-, und/oder Allylether-Gruppen.

Geeignete Monomere mit mindestens einer ethylenisch ungesättigten Gruppe enthalten bevorzugt keine nukleophile Gruppe mit aktivem Wasserstoffatom, insbesondere keine nukleophile Gruppe mit einem NCO-reaktiven Wasserstoffatom.

Bevorzugt ist das Monomer mit mindestens einer ethylenisch ungesättigten Gruppe ausgewählt aus Verbindungen mit den folgenden Strukturen: 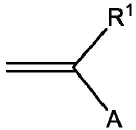 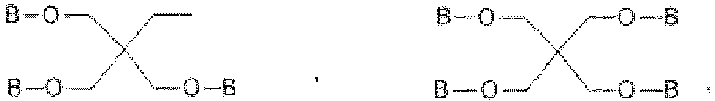 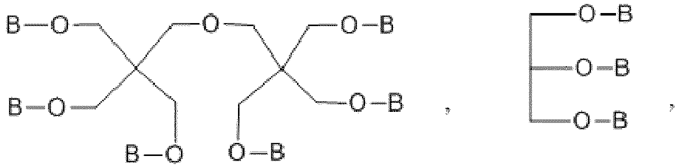 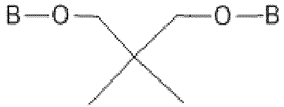 mit 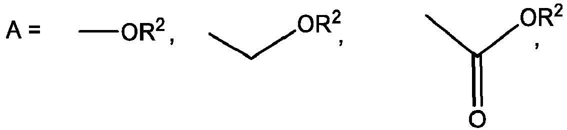 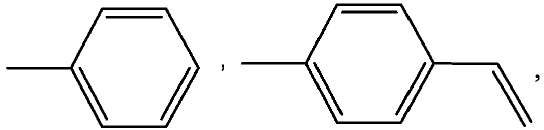 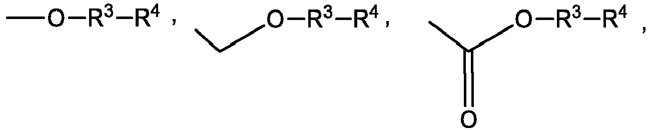 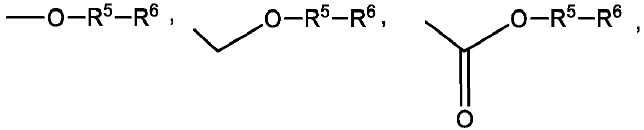 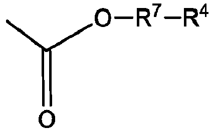
**B = -R⁵-R⁶**
R¹ = -C₁-C₆-Alkyl oder -H, bevorzugt -H oder -CH₃,
R² = lineares oder verzweigtes C₁-C₂₄-Alkyl,
R³ = lineares oder verzweigtes C₁-C₂₄-Alkylen, 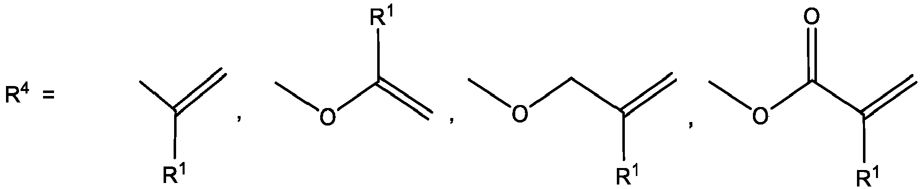 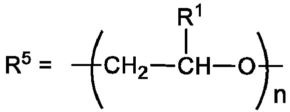 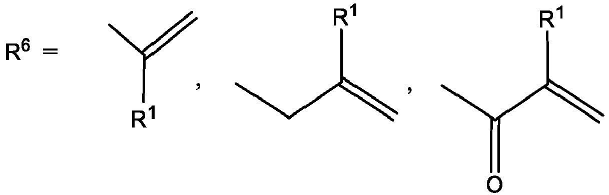
R⁷ = Polyester, insbesondere erhältlich durch Reaktion von C₁-C₆-Alkyldiolen und C₁-C₆-Alkyldicarbonsäuren, wie z.B. Malonsäure, Oxalsäure, Bernsteinsäure, Glutarsäure oder Adipinsäure, und
n = 0-20.

Bevorzugte Monomere mit einer ethylenisch ungesättigten Gruppe sind C₁-C₂₄-Alkylester der (Meth)Acrylsäure, C₁-C₂₄-Vinylether, C₁-C₂₄-Allylether und Styrol. *"Alkyl"* im Sinne der vorliegenden Erfindung ist ein gesättigter, linearer, zyklischer oder verzweigter, Kohlenwasserstoff. Besonders bevorzugt sind Monomere mit einer ethylenisch ungesättigten Gruppe Methyl-, Ethyl-, n-Propyl-, n-Butyl-, *iso*-Butyl *(sec-*Butyl- und *tert*-Butyl-) und *iso*-Propyl-(Meth)Acrylat.

Als Monomere mit mehreren, bevorzugt 2, 3, 4 oder 5, ethylenisch ungesättigten Gruppen werden bevorzugt Diester von Diolen und (Meth)Acrylsäure und Diallyl- und Divinylether dieser Diole verwendet. Besonders bevorzugt sind Monomere mit mehreren ethylenisch ungesättigten Gruppen ausgewählt aus Ethandioldiacrylat, Ethylenglykoldimethacrylat, 1,3-Buthylenglykolmethacrylat, Allylacrylat, Allylmethacrylat, Polyester von Polyolen und (Meth)Acrylsäure und Polyallyl- und Polyvinylether dieser Polyole, insbesondere Butandioldi(meth)acrylat, Hexandioldi(meth)acrylat, Trimethylolpropantri(meth)acrylat und Pentaeritrittetra(meth)acrylat.

Bevorzugt wird die kernnahe Schicht durch radikalische Polymerisation erhalten. Geeignete radikalische Polymerisationsinitiatoren sind neben UV-Initiatoren und Redoxinitiatoren insbesondere Peroxide, Hydroperoxide, Azoverbindungen, Persulfate, Perborate, oder Mischungen davon.

Bevorzugt wird die kernnahe Schicht durch radikalische Polymerisation von Methyl(meth)acrylat, Ethyl(meth)acrylat, *N*-Propyl(meth)acrylat oder *N-*Butyl(meth)acrylat und Butandioldi(meth)acrylat und/oder Trimethylolpropantri(meth)acrylat erhalten.

Das molare Verhältnis von Monomeren mit einer ethylenisch ungesättigten Gruppe zu Monomeren mit mehreren ethylenisch ungesättigten Gruppen ist bevorzugt 0 bis 40, stärker bevorzugt 2 bis 40, noch stärker bevorzugt 4 bis 30.

In einer anderen Ausführungsform ist die kernnahe Schicht erhältlich durch Polymerisation von 100 mol-% an Monomeren mit einer ethylenisch ungesättigten Gruppe.

Das Polymer der kernnahen Schicht enthält bevorzugt mindestens 55 mol-%, stärker bevorzugt mindestens 60 mol-%, noch stärker bevorzugt mindestens 65 mol-% und am stärksten bevorzugt mindestens 70 mol-% an Monomeren mit einer ethylenisch ungesättigten Gruppe bezogen auf die Gesamtstoffmenge der Monomere in der kernnahen Schicht, beispielsweise 70 bis 100 mol-%.

Der Anteil an Monomeren mit mehreren ethylenisch ungesättigten Gruppen in der kernnahen Schicht beträgt beispielsweise 0 bis 45 mol-%, bevorzugt bis 30 mol-%, wie 5 bis 30 mol-%, stärker bevorzugt bis 20 mol-%, beispielsweise 10 bis 20 mol-%, noch stärker bevorzugt bis 15 mol-%, beispielsweise 10 bis 15 mol-% und am stärksten bevorzugt 0,01 bis 30 mol-% bezogen auf die Gesamtstoffmenge der Monomere in der kernnahen Schicht.

In einer bevorzugten Ausführungsform ist die kernnahe Schicht erhältlich durch Polymerisation von mindestens 80 mol-% an Monomeren mit einer ethylenisch ungesättigten Gruppe und bis zu 20 mol-% an Monomeren mit mehreren ethylenisch ungesättigten Gruppen.

Das Verhältnis von Monomeren mit einer ethylenisch ungesättigten Gruppe und Monomeren mit mehreren ethylenisch ungesättigten Gruppen bestimmt den Vernetzungsgrad. Der Vernetzungsgrad beeinflusst maßgeblich, z.B. die mechanische Stabilität und die Permeabilität der Schicht. So erhöht sich mit zunehmendem Vernetzungsgrad (also mit zunehmendem Anteil an Monomeren mit mehreren ethylenisch ungesättigten Gruppen) üblicherweise die mechanische Stabilität, gleichzeitig verringert sich die Permeabilität. Auch die Dicke der kernnahen Schicht spielt eine Rolle für die mechanische Stabilität und die Permeabilität. Je dicker die Schicht, desto geringer ist üblicherweise die Permeabilität und desto höher ist üblicherweise die mechanische Stabilität.

Die kernferne Schicht enthält bevorzugt mindestens eine Urethan-, Allophanat-, Carbodiimid-, Isocyanurat-, Biuret-, Uretdion-, Harnstoff-, Iminooxadiazindion- und/oder Uretonimingruppe, stärker bevorzugt mindestens eine Urethan- und/oder Harnstoffgruppe.

In einer bevorzugten Ausführungsform ist die kernferne Schicht ein Additionsprodukt aus mindestens einem Polyisocyanat und mindestens einer Verbindung umfassend mindestens zwei Gruppen mit NCO-reaktivem Wasserstoffatom, bevorzugt Hydroxy-, Amino-, Carbonsäure-, Urethan-, und/oder Harnstoffgruppen.

In einer bevorzugten Ausführungsform ist die kernferne Schicht ein Polyurethan.

Bevorzugt ist das Polyisocyanat aromatisch, alicyclisch oder aliphatisch. Bevorzugt ist das Polyisocyanat ausgewählt aus Methylendiphenylisocyanat (MDI), polymerem MDI, Toluylendiisocyanat (TDI), Triphenylmethan-4,4',4"-triisocyanat, 2,4,6-Triisocyanattoluol, Isophorondiisocyanat (IPDI), 4,4'-Methylenebis-(cyclohexylisocyanat) (H12MDI), Methyl-2,4-cyclohexan-diisocynat, 1,3,5-Triisocyanatcyclohexan, 1,3,5-Trimethylisocyanatcyclohexan, Trimethylendiisocyanat, 1,4,8-Triisocyanatoctan, 1,3,6-Triisocyanathexan, Hexamethylendiisocyanat, Xylendiisocyanat (XDI), insbesondere 1,3- oder 1,4-Xylendiisocanat, und Derivaten davon, wie z.B. biurethaltigen- und isocyanurathaltige-Polyisocanaten.

Ein Teil der NCO-Gruppen des Polyisocyanats kann blockiert sein. Bei blockierten Isocyanaten sind die NCO-Gruppen mit Schutzgruppen umgesetzt, sodass keine Reaktion der Isocyanatgruppe bei üblichen Lagerbedingungen (z.B. 0 bis 80 °C) erfolgt. Durch Aktivierung der blockierten Isocyanaten, z.B. durch erhöhte Temperatur (sogenannte Deblockierungstemperatur, z.B. >80 °C) kann die Schutzgruppe unter Rückbildung der Isocyanatgruppen abgespalten werden. Die Blockierung von Isocyanaten ist dem Fachmann bekannt und in der Literatur beschrieben (siehe D.A. Wicks, Z.W. Wicks Jr., Progress in Organic Coating 36 (1999, 148-172). Geeignete Blockierungsmittel von Isocyanaten sind beispielsweise Malonsäureester, wie z.B. Dimethylmalonat, Acetoacetat z.B. Ethylacetoacetat, β-Diketone (z.B. 2,4-Pentandion) und Cyanoacetate; Bisulfit (z.B. Natriumbisulfit), Phenol (z.B. 4-Nitrophenol), Pyridinol (z.B. 3-Hydroxypyridin), Thiophenol, Mercaptopyridin (z.B. 2-Mercaptopyridin), Alkohol (z.B. 2-Ethylhexylalkohol), N-Hydroxysuccinimid, Oxim (z.B. Methylethylketonoxim, 2-Butanonoxim), Amid (z.B. Acetanilid, Caprolactam), Imid (z.B. Succinimid), Imidazol, Amidin, Guanidin, Pyrazol (z.B. 3,5-Dimethylpyrazol), Triazole (z.B. 1,2,4-Triazol) oder Amin (z.B. Piperidin, tert.-Butylbenzylamin).

Gegebenenfalls kann für die Umsetzung der Isocyanatgruppen mindestens ein Katalysator zugesetzt werden. Dafür eignen sich beispielsweise alle dem Fachmann bekannten Katalysatoren die in der Polyurethanchemie eingesetzt werden. In Betracht kommen hierbei zum Beispiel organische, insbesondere tertiäre aliphatische, cycloaliphatische oder aromatische Amine, und Lewissaure organische Metallverbindungen. Darunter fallen u.a. N,N'-Dimethylaminoethanol, N,N'-Dimethylcyclohexylamin, 1,4-Diazabicyclo[2.2.2]octan, Zinn(II)-2-ethylhexanoat, Dibutylzinndilaurat und Mischungen davon.

Der Katalysator wird vorzugsweise in Mengen von 0,0001 bis 10 Gew.-%, besonders bevorzugt in einer Menge von 0,001 bis 5 Gew.-% eingesetzt, bezogen auf die Masse des Polyisocyanats.

Bevorzugt werden zur Blockierung von Isocyanatgruppen Pyrazol, Oxim und Benzylamin verwendet, stärker bevorzugt 3,5-Dimethylpyrazol, 2-Butanonoxim und tert.-Butylbenzylamin.

Bevorzugt sind 0,1 bis 80 %, stärker bevorzugt 1 bis 50 %, noch stärker bevorzugt 1 bis 30 % der NCO-Gruppen des Polyisocyanats blockiert. Bevorzugt liegt die Deblockierungstemperatur im Bereich von 80 bis 180 °C, stärker bevorzugt im Bereich von 120 bis 160 °C.

Ein Vorteil der reversiblen Blockierungsreaktion von Isocyanatgruppen besteht in der Regeneration einer hochreaktiven funktionellen Gruppe. So ist diese beispielsweise in der Lage die Anbindung der Kern-Schale-Partikel an ein Substrat zu verbessern und damit auch die Abrieb- und/oder Waschbeständigkeit.

Die Verbindung, umfassend mindestens zwei Gruppen mit NCO-reaktivem Wasserstoffatom, ist bevorzugt ausgewählt aus Polyol (inklusive Diol), Polyesterpolyol, Polyetherpolyol, Polyharnstoff, amino- und/oder hydroxyfunktionalisierten Homo- oder Copolymer, Polyamin (inklusive Diamin), hydroxyfunktionellem Amin, Polyurethan und/oder Polycarbonsäure.

Polyetherpolyole basieren bevorzugt auf C₂-C₅-Alkylenoxideinheiten, wie z.B. Ethylenoxid-, Propylenoxid-, Butanoxid- und/oder Pentanoxideinheiten. Bevorzugt sind Polyetherpolyole Polyethylenglycol und/oder Polypropylenglycol.

Polyesterpolyole sind bevorzugt Reaktionsprodukte aus Diolen (z.B. 1,4-Butandiol, Diethylenglycol, oder 1,6-Hexandiol) mit Dicarbonsäuren (z.B. Glutarsäure, Adipinsäure oder Pimelinsäure), und/oder Lactonen (z.B. ε-Caprolacton).

Hydroxyfunktionalisierte Polymere basieren bevorzugt auf hydroxyfunktionellen Vinylmonomeren z.B. 2-Hydroxyethyl(meth)acrylat und 2-Hydroxypropyl(meth)acrylat.

Geeignete Polyamine verfügen über mindestens zwei primäre und/oder sekundäre Amine. Bevorzugt werden Polyvinylamin, Diethylentriamin, Pentaethylenhexamin, Toluoldiamin, Piperazin, Polyethylenimin und Mischungen davon verwendet.

Bevorzugte hydroxyfunktionelle Amine sind Ethanolamin oder Aminopropylalkohol.

Bevorzugt ist die Verbindung umfassend mindestens zwei Gruppen mit NCO-reaktivem Wasserstoffatom wasserlöslich (>10 g/l bei 20 °C). Bevorzugt ist das molare Verhältnis von NCO-Gruppen zu Gruppen mit NCO-reaktivem Wasserstoffatom, z.B. -OH, -NH₂, -NHR, zwischen 1 und 100, bevorzugt 2 und 100, stärker bevorzugt 5 und 100 und noch stärker bevorzugt 5 und 80.

In einer bevorzugten Ausführungsform umfasst das Additionsprodukt der kernfernen Schicht etwa 1 bis 50 mol-%, stärker bevorzugt etwa 3 bis 40 mol-% und noch stärker bevorzugt etwa 5 bis 20 mol-% der Verbindung, umfassend mindestens zwei Gruppen mit NCO-reaktivem Wasserstoffatom, bezogen auf die Stoffmenge der ursprünglich zur Verfügung stehenden freien Isocyanat- Gruppen.

In einer bevorzugten Ausführungsform enthält die kernferne Schicht mindestens 1 mol-%, bevorzugt mindestens 2,5 mol-%, noch stärker bevorzugt mindestens 5 mol-% an Polyolen und/oder Polyaminen, in Bezug auf die Stoffmenge der ursprünglich zur Verfügung stehenden freien Isocyanat-Gruppen.

Das Additionsprodukt der kernfernen Schicht umfasst bevorzugt etwa 40 bis 99 Gew.-% Polyisocyanat, stärker bevorzugt 60 bis 99 Gew.-%, noch stärker bevorzugt 70 bis 99 Gew.-%, noch stärker bevorzugt 80 bis 99 Gew.-% und am stärksten bevorzugt etwa 90 bis 99 Gew.% Polyisocyanat bezogen auf die Gesamtmasse der kernfernen Schicht.

In einer bevorzugten Ausführungsform weist die kernferne Schicht mindestens eine zusätzliche funktionelle Gruppe, bevorzugt eine anionische, kationische oder nichtionische Gruppe auf.

Bevorzugt umfasst die anionische Gruppe mindestens eine Carboxylat-, Phosphat-, Phosphonat-, Sulfat-, Sulfonatgruppe. Stärker bevorzugt umfasst die anionische Gruppe die Formel (I)

-L-X Formel (I)

wobei
- X: SO₃⁻, SO₄⁻, COO⁻, PO₄²⁻ oder PO₃²⁻, insbesondere SO₃⁻ oder COO⁻ ist, und
- L: lineares oder verzweigtes, gesättigtes oder ungesättigtes C₁-C₁₀-Alkylen ist, das gegebenenfalls mit -OH, substituiert ist.

Im Fall von Additionsprodukten aus mindestens einem Polyisocyanat und mindestens einer Verbindung umfassend mindestens zwei Gruppen mit NCO-reaktivem Wasserstoffatom, kann die funktionelle anionische Gruppe durch Reaktion einer Isocyanatgruppe des Polyisocyanats mit einer Verbindung die neben einer anionischen Gruppe ein isocyanatreaktives Wasserstoffatom aufweist in die kernferne Schicht eingeführt werden. Bevorzugt haben oben genannte Verbindungen die Formel A-L-X, wobei L und X wie oben definiert sind und A bevorzugt OH, NH₂ oder NHR ist.

Bevorzugt ist die funktionelle kationische Gruppe ein quaternäres Ammoniumion oder ein Ammoniumsalz und weist stärker bevorzugt Formel (II) auf:

-L-Y Formel (II)

wobei
Y NHR₈R₉⁺ oder NR₈R₉R₁₀⁺ ist,
R₈, R₈ und R₁₀ jeweils unabhängig voneinander H oder lineares oder verzweigtes, gesättigtes oder ungesättigtes, C₁-C₁₀-Alkyl sind, das gegebenenfalls mit -OH und/oder -COOH substituiert ist und
L wie oben definiert ist.

Im Falle eines Additionsprodukts aus mindestens einem Polyisocyanat und mindestens einer Verbindung umfassend mindestens zwei Gruppen mit NCO-reaktivem Wasserstoffatom wird die kationische funktionelle Gruppe bevorzugt über eine Verbindung eingeführt, die neben einem isocyanatreaktiven Wasserstoffatom ein quaternäres Ammoniumion, sekundäres bzw. tertiäres Amin aufweist. Bevorzugte Verbindungen sind *N-*Methyldiethanolamin und *N,N*-Dimethylethanolamin. Die Amine können anschließend durch Alkylierung oder Protonierung in quaternäre Ammoniumgruppen oder Ammoniumionen umgesetzt werden. Bevorzugt werden die Amine methyliert. Dem Fachmann sind geeignete Verfahren zur Alkylierung und entsprechende Alkylierungsmittel bekannt. Bevorzugte Alkylierungsmitel sind Dimethylsulfat, Methylchlorid, oder Methyltosylat.

Bevorzugte nichtionische funktionelle Gruppen umfassen Polyalkylenoxide, bevorzugt Polyethylenoxid und/oder Polypropylenoxid. Bevorzugt werden Polyalkylenoxide mit einem gewichtsmittleren Molekulargewicht von 200 bis 2000 g/mol, stärker bevorzugt 400 bis 1000 g/mol verwendet. Bevorzugte Polyalkylenoxide sind Methyl-gecapptes-Polyethylenglykol (MPEG), Methyl-gecapptes-Polypropylenglykol oder Methyl-gecapptes-Poly-(ethylenglykol/ propylenglykol).

Im Fall von Additionsprodukten aus mindestens einem Polyisocyanat und mindestens einer Verbindung umfassend mindestens zwei Gruppen mit NCO-reaktivem Wasserstoffatom, kann die funktionelle nicht-ionische Gruppe durch Reaktion einer Isocyanatgruppe des Polyisocyanats mit einer Verbindung die neben einer nicht-ionischen Gruppe ein isocyanatreaktives Wasserstoffatom aufweist in die kernferne Schicht eingeführt werden.

In einer bevorzugten Ausführungsform ist die zusätzliche funktionelle Gruppe über eine Urethan-Gruppe an die kernferne Schicht kovalent gebunden.

Im Falle eines Additionsprodukts aus mindestens einem Polyisocyanat und mindestens einer Verbindung umfassend mindestens zwei Gruppen mit NCO-reaktivem Wasserstoffatom in der kernfernen Schicht können bis zu 30 %, stärker bevorzugt bis zu 20 %, noch stärker bevorzugt 0,1 bis 20 % der ursprünglich zur Verfügung stehenden NCO-Gruppen im Polyisocyanat mit einer Verbindung umfassend mindestens eine funktionelle Gruppe umgesetzt sein.

Die kernferne Schicht und die kernnahe Schicht können ggf. miteinander kovalent verbunden sein. Bevorzugt sind kernnahe und kernferne Schicht nicht kovalent miteinander verbunden. Zwischen kernferner Schicht und kernnaher Schicht können eventuell oberflächenaktives Reagenz, insbesondere Tensid, Entschäumer, Schutzkolloid oder Verdickungsmittel angeordnet sein. Die Verbindungen, die hauptsächlich zwischen der kernfernen und der kernnahen Schicht angeordnet sein können, machen beispielsweise 0 bis 70 Gew.-%, bevorzugt 5 bis 30 Gew.-%, stärker bevorzugt 10 bis 15 Gew.-% bezogen auf die Gesamtmasse der kernfernen und der kernnahen Schicht aus.

In einer besonders bevorzugten Ausführungsform umfasst der erfindungsgemäße Kern-Schale-Partikel
(a) einen Kern umfassend mindestens eine lipophile Verbindung und
(b) eine Schale umfassend eine kernnahe Schicht und eine kernferne Schicht.

In einer besonders bevorzugten Ausführungsform besteht der Kern-Schale-Partikel aus
(a) einem Kern umfassend mindestens eine lipophile Verbindung,
(b) einer Schale umfassend eine kernnahe Schicht und eine kernferne Schicht und
(c) ggf. mindestens einem Hilfsstoff, insbesondere oberflächenaktives Reagenz, bevorzugt Tensid, Bindemittel, Entschäumer, Schutzkolloid oder Verdickungsmittel.

In einer besonders bevorzugten Ausführungsform besteht der Kern-Schale-Partikel aus
(a) einem Kern umfassend mindestens eine lipophile Verbindung und
(b) einer Schale umfassend eine kernnahe Schicht und eine kernferne Schicht.

In einer besonders bevorzugten Ausführungsform umfasst der erfindungsgemäße Kern-Schale-Partikel
(a) einen Kern umfassend mindestens eine lipophile Verbindung und
(b) eine Schale umfassend eine kernnahe Schicht und eine kernferne Schicht,
wobei die kernnahe Schicht erhältlich ist durch Polymerisation von mindestens einem Monomer mit mindestens einer ethylenisch ungesättigten Gruppe.

In einer besonders bevorzugten Ausführungsform umfasst der erfindungsgemäße Kern-Schale-Partikel
(a) einen Kern umfassend mindestens eine lipophile Verbindung und
(b) eine Schale umfassend eine kernnahe Schicht und eine kernferne Schicht,
wobei die kernnahe Schicht erhältlich ist durch Polymerisation von mindestens einem Monomer mit mindestens einer ethylenisch ungesättigten Gruppe und die kernferne Schicht mindestens eine Urethan-, Allophanat-, Carbodiimid-, Isocyanurat-, Biuret-, Uretdion-, Harnstoff-, Iminooxadiazindion- oder Uretonimingruppe enthält und bevorzugt ein Polyurethan ist.

Das Gewichtsverhältnis zwischen kernnaher Schicht und kernferner Schicht liegt bevorzugt bei 50:50 bis 95:5 Gew.-%, stärker bevorzugt 70:30 bis 90:10 Gew.-% und am stärksten bevorzugt 80:20 bis 90:10 Gew.-% bezogen auf die Gesamtmasse der kernnahen und der kernfernen Schicht.

Das Gewichtsverhältnis von Kern:Schale liegt bevorzugt im Bereich von 50:50 bis 95:5, bevorzugt 70:30 bis 90:10.

Bevorzugt ist die kernferne Schicht permeabel für die lipophile Verbindung. Verfahren zur Bestimmung der Permeabilität der Kern-Schale-Partikel sind bekannt. Die Permeabilität kann beispielsweise über den Verlust an latenter Wärme mittels dynamischer Differenzkalorimetrie (engl. Differential Scanning Calorimetrie - DSC) bestimmt werden (vgl. auch Beispiele).

Die erfindungsgemäßen Kern-Schale-Partikel sind bevorzugt kugelförmig oder ellipsoid, stärker bevorzugt kugelförmig.

Der mittlere Durchmesser (D50) der erfindungsgemäßen Kern-Schale-Partikel beträgt bevorzugt 0,1 bis 100 µm, stärker bevorzugt 0,5 bis 80 µm und noch stärker bevorzugt 1 bis 75 µm (z.B. bestimmt über Laserbeugung).

Ein weiterer Aspekt der Erfindung betrifft eine Zusammensetzung umfassend mindestens einen erfindungsgemäßen Kern-Schale-Partikel. Bevorzugt enthält die Zusammensetzung ferner Wasser.

In einer bevorzugten Ausführungsform enthält die Zusammensetzung ferner mindestens ein Hilfsmittel, bevorzugt mindestens ein oberflächenaktives Reagenz, insbesondere ein Tensid, ein Bindemittel, einen Entschäumerein Schutzkolloid und/oder ein Verdickungsmittel.

Als oberflächenaktive Reagenzien können insbesondere nichtionische, anionische oder kationische Tenside und/oder Mischungen davon verwendet werden. Bevorzugte nichtionische Tenside sind z.B. Alkoxylierungsprodukte von Fettsäuren, Fettsäureestern, Fettsäureamiden, aliphatischen Alkoholen und Zuckerderivaten. Bevorzugt werden Ethoxylierungsprodukte linearer oder verzweigter aliphatischer Alkohole mit 6 bis 22 Kohlenstoffatomen verwendet.

Bevorzugte kationische Tenside sind quaternäre Ammoniumsalze, wie z.B. Di-(C10-C24)-alkyldimethylammoniumchlorid, (C10-C24)-Alkyldimethylethyl-ammoniumchlorid oder -bromid, (C10-C24)-Alkyltrimethylammoniumchlorid oder -bromid, (C10-C24)-Alkyldimethylbenzylammoniumchlorid, Alkylmethylpoly(oxyethylen)ammoniumchlorid, -bromid oder -monoalkylsulfat, Salze von primären, sekundären und tertiären Fettaminen mit 8 bis 24 C-Atomen mit organischen oder anorganischen Säuren, Salze von ethoxylierten primären und sekundären Fettaminen mit 8 bis 24 C-Atomen mit organischen oder anorganischen Säuren, Imidazolinium-Derivate oder Esterquats genannt. Bevorzugt werden Di-(10-C24)-Alkyldimethyl-ammoniumchlorid, (C10-C24)-Alkyltrimethylammoniumchlorid oder -bromid, Salze von primären, sekundären und tertiären Fettaminen mit 8 bis 24 C-Atomen mit organischen oder anorganischen Säuren und Esterquats.

Anionische Tenside sind insbesondere Fettalkoholsulfate wie z.B. Natriumlaurylsulfat, Alkylsulfonate wie z.B. Natriumlaurylsulfonat, Aklybenzolsulfonat, wie z.B. Natriumdodecylbenzolsulfonat und Fettsäuresalze wie z.B. Natriumstearat und Phosphatester, wie z.B. Phosphatester aliphatischer Alkohole.

Die oberflächenaktiven Reagenzien werden bevorzugt in einer Menge von 0-10 Gew.-%, stärker bevorzugt 0 bis 5 Gew.-%, noch stärker bevorzugt 0 bis 2 Gew.-% bezogen auf die Masse der Gesamtzusammensetzung zugegeben.

Bevorzugte Schutzkolloide sind bevorzugt wasserlösliche Polymere, beispielsweise Polyvinylalkohol, Cellulosederivate, insbesondere Hydroxyalkylcellulose oder Carboxyalkylcellulose, Gummi Arabicum, Polyacrylsäure, Polyacrylamid, Polyvinylpyrrolidon und/oder Maleinsäureanhydrid-Copolymere, besonders bevorzugt ist Polyvinylalkohol.

Das Schutzkolloid ist bevorzugt in Mengen von 0,01 bis 20 Gew.-%, stärker bevorzugt 0,1 bis 10 Gew.-%, noch stärker bevorzugt 0,5 bis 5 Gew.-% bezogen auf die Masse der Gesamtzusammensetzung zugegen.

Bevorzugte Bindemittel sind Polymere mit einer Glasübergangstemperatur im Bereich von -45 bis +45 °C, insbesondere ausgewählt aus Polymeren auf Basis von (Meth)Acrylsäureester, Styrol, Isopren, Butadien, Vinylacetat und/oder Isocyanat. Das Bindemittel ist bevorzugt in Mengen von 0,01 bis 20 Gew.-%, stärker bevorzugt 0,01 bis 5 Gew.-% bezogen auf die Masse der Gesamtzusammensetzung zugegen.

Bevorzugte Entschäumer sind ausgewählt aus Mineralöl, Kieselsäure, silkonhaltigen Verbindungen, wie z.B. Organosiliziumverbindungen. Der Entschäumer ist bevorzugt in Mengen von 0,01 bis 10 Gew.-%, stärker bevorzugt 0,01 bis 2 Gew.-% bezogen auf die Masse der Gesamtzusammensetzung zugegen.

Die erfindungsgemäße Zusammensetzung umfasst bevorzugt 10 bis 55 Gew.-%, stärker bevorzugt 15 bis 45 Gew.-%, noch stärker bevorzugt 20 bis 37,5 Gew.-% der erfindungsgemäßen Kern-Schale-Partikel bezogen auf die Gesamtmasse der Zusammensetzung.

Ein weiterer Aspekt der vorliegenden Erfindung ist ein Verfahren zur Herstellung des Kern-Schale-Partikels oder der erfindungsgemäßen Zusammensetzung. Das Verfahren umfasst die Schritte:
(i) Bereitstellen mindestens einer lipophilen Verbindung, ggf. aufgeschlämmt in einem Trägeröl,
(ii) Mischen der mindestens einen lipophilen Verbindung und ggf. des Trägeröls mit
   - mindestens einem Monomer mit mindestens einer ethylenisch ungesättigten Gruppe,
   - Wasser,
   - mindestens einem Polymerisationsinitiator,
   - mindestens einem Schutzkolloid,
   - gegebenenfalls mindestens einem oberflächenaktiven Reagenz,
   - gegebenenfalls mindestens einem Kettenregler, unter Bildung einer Emulsion, in der das Wasser die kontinuierliche Phase bildet.
(iii) Behandeln der in (ii) erhaltenen Emulsion bei erhöhter Temperatur unter Rühren,
(iv) Zugeben mindestens eines, gegebenenfalls teilblockierten, Polyisocyanats und mindestens einer Verbindung umfassend mindestens zwei Gruppen mit NCO-reaktivem Wasserstoffatom, und ggf. Zugeben mindestens einer Verbindung umfassend mindestens eine funktionelle Gruppe und ein NCO-reaktives Wasserstoffatom,
(v) gegebenenfalls Behandeln der in (iv) erhaltenen Mischung bei erhöhter Temperatur,
(vi) gegebenenfalls Zugeben mindestens eines Bindemittels, Entschäumers, oberflächenaktiven Reagenz und/oder eines Verdickungsmittels, und
(vii) gegebenenfalls zumindest teilweises Entfernen des Wassers.

Sofern die lipophile Verbindung bei Raumtemperatur als Feststoff vorliegt, wird Schritt (i) bevorzugt bei Temperaturen oberhalb Raumtemperatur, insbesondere bevorzugt bei Temperaturen oberhalb des Schmelzpunkts der lipophilen Verbindung(en) durchgeführt. Unter diesen Bedingungen kann sich eine Emulsion insbesondere eine ÖI-in-Wasser-Emulsion bilden, in der das Wasser die kontinuierliche Phase bildet und die lipophile(n) Verbindung(en) zusammen mit zumindest einem Teil des Monomers die disperse Phase bildet.

Das Schutzkolloid stabilisiert die Emulsion. Die Stabilisierung der Emulsion kann weiterhin durch Zugabe von oberflächenaktiven Reagenzien verbessert werden. Schutzkolloide und oberflächenaktive Reagenzien sind wie oben definiert und werden in den entsprechenden Mengen bevorzugt eingesetzt.

Bevorzugte Polymerisationsinitiatoren sind radikalische Initiatoren, insbesondere ein Peroxid, eine Azoverbindung, ein Persulfat, ein Hydroperoxid und/oder ein Redoxinitiator oder Mischungen davon. Die Zerfallstemperatur der Polymerisationsinitiatoren liegt bevorzugt oberhalb des Schmelzpunktes der lipophilen Verbindung, insbesondere bei bis zu 50 °C über dem Schmelzpunkt der lipophilen Verbindung. Als geeignete Initiatoren kommen Azoverbindungen, wie z.B. 2,2'-Azobis-(2-amidinopropan)dihydrochlorid, 2,2'-Azobis-(*N*,*N-*dimethylen)isobutyramidin-dihydrochlorid, 2-(Carbamoylazo)isobutyronitril, 4,4'-Azobis-(4-cyanovaleriansäure), 2,2'-Azobis[2-(2-imidazolin-2-yl)propan]dihydrochlorid, und 2,2'-Azobis(2,4-dimethylvaleronitril) infrage.

Geeignete Peroxidverbindungen sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperisobutyrat, tert.-Butylper-2-ethylhexanoat, tert.-Butylperisononanoat, tert.-Butylpermaleat, tert.-Butylperbenzoat, tert.-Butylper-3,5,5-trimethylhexanoat und tert.-Amylperneodekanoat, sowie Natriumperoxodisulfat oder Kaliumperoxodisulfat.

Besonders bevorzugte Initiatoren sind 2,2'-Azobis[2-(2-imidazolin-2-yl)propan]dihydrochlorid und 2,2'-Azobis(2,4-dimethylvaleronitril), deren 10 Stunden-Halbwertszeit im Temperaturbereich von 30 bis 100°C liegt. Der Initiator kann als Feststoff oder Lösung verwendet werden. Die Polymerisationsinitiatoren werden üblicherweise in Mengen von 0,01 bis 5 Gew.-%, bevorzugt 0,1 bis 3,5 Gew.-% in Bezug auf die Gesamtmasse der Monomere mit mindestens einer ethylenisch ungesättigten Gruppe eingesetzt.

Die Kettenlänge der Polymere erhältlich aus Monomeren mit mindestens einer ethylenisch ungesättigten Gruppe kann über Kettenregler gesteuert werden. Dem Fachmann sind solche Kettenregler bekannt. Bevorzugte Kettenregler sind schwefelhaltige Verbindungen, insbesondere Thiole, insbesondere Laurylmercaptan oder Ethylhexylthioglykolat. Der Kettenregler wird typischerweise in Mengen von 0 bis 4 Gew.-%, stärker bevorzugt 0,01 bis 3 Gew.-%, bezogen auf die Gesamtmasse der Monomere mit mindestens einer ethylenisch ungesättigten Gruppe eingesetzt.

Nach Schritt (ii) wird die Mischung unter Scherkräften, insbesondere unter Verwendung eines Homogenisators, z.B. Ultra-Turrax® oder Dispax® ggf. weiter emulgiert. Die durchschnittliche mittels Lichtstrahlung bestimmte Tröpfchengröße (D50) der dispersen Phase ist bevorzugt von 0,1 bis 100 µm, stärker bevorzugt 0,5 bis 80 µm, noch stärker bevorzugt 1 bis 75 µm.

Die in Schritt (ii) erhaltene Emulsion wird anschließend im Schritt (iii) bei erhöhter Temperatur, bevorzugt bei 25 bis 100 °C, stärker bevorzugt bei 50 bis 100 °C, unter Rühren behandelt. Der Behandlungsschritt (iii) dauert üblicherweise 0,5 bis 8 Stunden, bevorzugt 1 bis 8 Stunden, stärker bevorzugt 3 bis 4 Stunden. Nach Schritt (iii) sind bevorzugt 90 bis 100 % der Monomere mit mindestens einer ethylenisch ungesättigten Gruppe umgesetzt.

Schritt (ii) und Schritt (iii) werden bevorzugt unter Schutzgasatmosphäre, insbesondere unter Stickstoff oder Argon, durchgeführt.

Durch die radikalische Polymerisation bildet sich in situ an der Grenzfläche zwischen disperser Phase und kontinuierlicher Phase ein Polymer. Dadurch ergeben sich bevorzugt kugelförmige oder ellipsoide Partikel aus Kernen, die von der kernnahen Schicht umgeben sind. Die so erhaltenen Partikel haben bevorzugt einen Durchmesser D50 von 0,1 bis 100 µm, bevorzugt 0,5 bis 80 µm, stärker bevorzugt 1 bis 75 µm.

In Schritt (iv) wird zu den in der kontinuierlichen Phase dispergierten Partikel aus Schritt (iii) mindestens ein - gegebenenfalls teilblockiertes - Polyisocyanat und mindestens eine Verbindung umfassend mindestens zwei Gruppen mit NCO-reaktivem Wasserstoffatom zugegeben. Gegebenenfalls wird in diesem Schritt mindestens eine Verbindung umfassend mindestens eine funktionelle Gruppe und ein NCO-reaktives Wasserstoffatom zugegeben. Letztere Verbindung wird insbesondere dann zugegeben, wenn eine funktionelle kernferne Schicht erhalten werden soll. Alternativ kann das Polyisocyanat auch bereits schon mindestens eine funktionelle Gruppe enthalten. Schritt (iv) erfolgt üblicherweise bei Temperaturen von 25 bis 100 °C, bevorzugt 50 bis 100 °C.

In Schritt (iv) orientiert sich das gegebenenfalls teilblockierte Polyisocyanat zu der den Kern umgebenden kernnahen Schicht. Durch die anschließende Zugabe der Verbindung umfassend mindestens zwei Gruppen mit NCO-reaktivem Wasserstoffatom bildet sich auf der kernnahen Schicht eine kernferne Schicht.

In Schritt (v) wird die in Schritt (iv) erhaltene Mischung gegebenenfalls bei erhöhter Temperatur thermisch behandelt. Schritt (v) - sofern durchgeführt - erfolgt bevorzugt bei Temperaturen von 25 bis 100 °C, bevorzugt 30 bis 90 °C. Die Reaktionsdauer liegt bevorzugt bei 0,25 bis 4 Stunden. Unter diesen Bedingungen sind bevorzugt 90 bis 100 %, stärker bevorzugt 95 bis 100 % sämtlicher NCO-Gruppen umgesetzt.

In einer bevorzugten Ausführungsform erfolgt zwischen der kernnahen und der kernfernen Schicht keine chemische Reaktion, die gegebenenfalls zu einer kovalenten Verbindung der kernnahen und der kernfernen Schicht führt.

Nach erfolgter Reaktion in Schritt (iv) oder (v) können gegebenenfalls noch Hilfsmittel wie Bindemittel, Entschäumer, oberflächenaktives Reagenz und/oder Verdickungsmittel zugegeben werden.

Nach Schritt (iv) bzw. Schritt (v) wird eine erfindungsgemäße Zusammensetzung umfassend die erfindungsgemäßen Kern-Schale-Partikel und Wasser erhalten. Die erhaltene Zusammensetzung bildet eine stabile Dispersion. Darin haben die Kern-Schale-Partikel einen Durchmesser D50 von 0,1 bis 100 µm, bevorzugt 0,5 bis 80 µm, stärker bevorzugt von 1 bis 75 µm.

Nach Schritt (vi) ist es gegebenenfalls möglich die Partikelgrößenverteilung über Filtrationsschritte zu egalisieren.

Die Kern-Schale-Partikel können durch die dem Fachmann bekannten Verfahren im Schritt (vii) gegebenenfalls isoliert werden, indem das Wasser zumindest teilweise entfernt wird. Bevorzugte Verfahren sind Zentrifugation, Filtration, Destillation und/oder Sprühtrocknung.

In einem weiteren Aspekt ist die vorliegende Erfindung auf Kern-Schale-Partikel gerichtet, die durch das oben beschriebene Verfahren erhältlich sind.

Die erfindungsgemäßen Kern-Schale-Partikel und Zusammensetzungen können in einer Vielzahl von technischen Gebieten verwendet werden. So können sie zum Beispiel zur Funktionalisierung von Flächengebilden, insbesondere Fasern, textilen Flächengeweben, Farben, Lacken, Baustoffen, Kunststoffen und/oder Kunststoffschäumen verwendet werden. Ein Aspekt der vorliegenden Erfindung ist daher die Verwendung der erfindungsgemäßen Kern-Schale-Partikel oder der erfindungsgemäßen Zusammensetzung zur Funktionalisierung von Flächengebilden, insbesondere Fasern, textilen Flächengeweben, Baustoffen, Kunststoffen oder Kunststoffschäumen, zum Beispiel Polyurethan-, Polystyrol-, Latex- und Melaminharzschäumen, Farben und Lacken.

Als Textilien sind insbesondere Fasern oder textile Flächengebilde, wie Textilgewebe, Nonwovens (beispielsweise Vliesstoffe oder Filter) zu verstehen. Zur Funktionalisierung von Textilfasern können die Kern-Schale-Partikel einer Schmelze oder in Form einer wässrigen Dispersion der Fasermatrix zugesetzt werden und in einem Spinnverfahren, beispielsweise in einem Schmelzspinnverfahren bzw. einem Nassspinnverfahren eingesetzt werden.

Unter "Fasern" werden Naturfasern sowie Kunstfasern verstanden. "Naturfasern" enthalten bevorzugt Baumwolle, Wolle und/oder Seide. "Synthetische Fasern" oder "Kunstfasern" werden synthetisch aus natürlichen und/oder synthetischen Polymeren hergestellt und enthalten bevorzugt Polyester, Polyolefin, z.B. bevorzugt Polyethylen oder Polypropylen, stärker bevorzugt Polypropylen, Polyamid, Polyaramid, wie z.B. Kevlar® und Nomex®, Polyacrylnitril, Elasthan und/oder Viskose.

Als Textilien sind insbesondere Fasern oder textile Flächengebilde zu verstehen. Ein "Textil" ist aus mehreren Fasern hergestellt und bevorzugt linienförmig oder flächig. Unter "linienförmigem Textil" wird beispielsweise ein Garn, ein Zwirn oder ein Seil verstanden. "Flächige Textilien" sind bevorzugt Vliese, Filze, Gewebe, Gewirke und Geflechte. Textilien können Naturfasern und synthetischen Fasern oder Mischungen davon enthalten.

Ein weiterer Gegenstand der vorliegenden Erfindung ist ein Verfahren zur Ausrüstung von Flächengebilden, insbesondere von Textilien, umfassend die Schritte
(a) Bereitstellen der erfindungsgemäßen Kern-Schale-Partikel oder Zusammensetzungen,
(b) Aufbringen der erfindungsgemäßen Kern-Schale-Partikel oder Zusammensetzungen auf ein Flächengebilde; und
(c) thermisches Behandeln des Flächengebildes.

Der Auftrag der Kern-Schale-Partikel oder der Zusammensetzung z.B. durch Tränken des Textils, insbesondere des textilen Flächengebildes, im Schritt (b) erfolgt im Allgemeinen mit Auflagen von 0,1 bis 3 Gew.-%, vorzugsweise 1 bis 8 Gew.-%, besonders bevorzugt 1 bis 6,5 Gew.-% Feststoffanteil bezogen auf das Gewicht des zu behandelnden Textils. Üblicherweise wird hierzu eine wässrige Zusammensetzung in der gewünschten Konzentration hergestellt. Die Konzentration der Zusammensetzung wird dabei so gewählt, dass sich jeweils der gewünschte Auftrag ergibt. Der Zusammensetzung können weitere Präparationsmittel zugesetzt werden. Als zusätzliche Präparationsmittel kommen beispielsweise Chemikalien zur Knitterfreiausrüstung (z.B. Methylolverbindungen des Dihydroxyethylenharnstoffs oder Methylolmelaminether mit unterschiedlichen Methylolierungsgraden), Flammschutzmittel oder Weichgriffmittel in Betracht.

Die Zusammensetzung wird mit herkömmlichen dem Fachmann bekannten Verfahren, z.B. durch Zwangsapplikation, Ausziehverfahren, Sprühen, Tränken, Pflatschen, Drucken, Beschichten, zum Beispiel durch Transferbeschichtung oder Rotationsdruck, oder Foulardieren auf das Flächengebilde, insbesondere das textile Flächengebilde aufgetragen.

In einer bevorzugten Ausführungsform wird die erfindungsgemäße Zusammensetzung durch Tränken des Flächengebildes und anschließendes Abquetschen auf dem Foulard aufgebracht.

Die Trocknung und thermische Behandlung des in Schritt (b) erhaltenen Flächengebildes erfolgt im Schritt (c) bevorzugt bei Temperaturen zwischen 130 bis 170°C. Die Behandlung erfolgt bevorzugt im Spannrahmentrockner. Bei den angegebenen Temperaturen spalten sich - sofern vorhanden - auch die Blockierungsgruppen ab und verflüchtigen sich. Die entstandene reaktive Isocyanatgruppe reagiert mit isocyanatreaktiven Wasserstoffatomen des Flächengebildes und/oder der weiteren Komponenten, sodass die Kern-Schale-Partikel kovalent an das Flächengebilde gebunden werden. Die thermische Behandlung des Flächengebildes erfolgt bevorzugt in 0,5 bis 10 Minuten, insbesondere bevorzugt in 1 bis 5 Minuten. Die Dauer der thermischen Behandlung ist dabei auch abhängig von den angewendeten Temperaturen.

Die vorliegende Erfindung betrifft daher auch Flächengebilde, insbesondere Fasern oder textile Flächengebilde umfassend die erfindungsgemäßen Kern-Schale-Partikel oder die erfindungsgemäße Zusammensetzung.

Die Kern-Schale-Partikel beziehungsweise die Zusammensetzung gemäß der vorliegenden Erfindung können auch in Baustoffen, zur Herstellung von polymeren Formkörpern und/oder in polymeren Beschichtungsmassen verwendet werden. Bevorzugt werden die erfindungsgemäßen Kern-Schale-Partikel als funktioneller Zusatz in mineralischen Beschichtungsmassen wie zum Beispiel Putz oder in Wandfarben verwendet. Besonders geeignet sind die erfindungsgemäßen Kern-Schale-Partikel bei der Funktionalisierung von polymeren Formkörpern und polymeren Beschichtungsmassen aus thermoplastischen und duroplastischen Kunststoffen, bei deren Verarbeitung die Kern-Schale-Partikel nicht zerstört werden. Beispiele für thermoplastische und duroplastische Kunststoffe sind Epoxydharze, Harnstoff-Harze, Melaminharze, Polyurethan und Silikonharze, aber auch Lacke.

Es hat sich herausgestellt, dass die erfindungsgemäßen Kern-Schale-Partikel einfach und variabel funktionalisiert werden können, ohne die vorrangigen Eigenschaften der Kern-Schale-Partikel, wie z.B. Permeabilität und mechanische Stabilität, zu beeinflussen. Erfindungsgemäß wird über die kernnahe Schicht die Permeabilität und mechanische Stabilität der Partikel variabel eingestellt. Die kernnahe Schicht ist dabei bevorzugt aus einem gegenüber dem Kern inerten Material. Die kernferne Schicht lässt sich variabel funktionalisieren. Da zwischen kernnaher Schicht und kernferner Schicht bevorzugt keine Wechselwirkungen, insbesondere keine kovalenten Wechselwirkungen bestehen, beeinflusst die kernferne Schicht nicht das Eigenschaftsprofil der kernnahen Schicht. Die erfindungsgemäßen Kern-Schale-Partikel sowie das erfindungsgemäße Verfahren ermöglichen darüber hinaus ein Baukastensystem, bei dem die mit der kernnahen Schicht umhüllten Kerne auf Vorrat bereitgestellt werden, und anschließend beliebig mit unterschiedlichen funktionellen Gruppen über die kernferne Schicht modifiziert werden können, ohne dass sich die Eigenschaften des mit der kernnahen Schicht umgebenen Kerns (Primärpartikel) ändern.

Die vorliegende Erfindung wird anhand von Beispielen näher erläutert, wobei die Erfindung nicht auf diese Beispiele beschränkt ist.

### Ausführungsbeispiel - 1

**Verwendete Materialien**

| | | |
|---|---|---|
| Parafol 18-97 | Techn. n-Octadecan (97% Reinheit) | Sasol |
| Laromer TMPTA | Trimethylolpropantriacrylat | BASF |
| WAKO V-65B | 2,2'-Azobis(2,4-dimethylvaleronitril) | WAKO Chemicals |
| WAKO VA-044 | 2,2'-Azobis[2-(2-imidazolin-2-yl)propan]dihydrochlorid | WAKO Chemicals |
| Desmodur I | Isophorondiisocyanat | Covestro |
| 3,5-Dimethylpyrazol | 3,5-Dimethylpyrazol | Wacker |
| Heavy Polyamin XE | Komplexe Mischung linearer, cyclischer und verzweigter Ethylenamine (Amingehalt 33-38 %) | Dow Deutschland |
| Plextol R272 | Bindemittel - sel bstvernetzendes anionisches Polyacrylat-Copolymer (45 % Trockensubstanz TS) | Synthomer |
| Lutensit A-BO | Emulgator (Sulfosuccinat) (75 % TS) | BASF |
| Strodex PK90 | Emulgator (*Phosphatcoester aliphatischer Alkohole*) (90 % TS) | Ashland |
| Silfoam SE47 | Silikonentschäumer (17,5 % TS) | Wacker |
| Rohagit SD15 | Verdickungsmittel (Polyacrylat-Copolymer Acrylsäure-co-Ethylacrylat) (30 % TS) | Synthomer |

### Teilblockierung von Isocyanatgruppen

In einem Rundkolben wurde unter Stickstoffatmosphäre 40,00 g Isopropylacetat und 10,00 g (44,98 mmol) Isophorondiisocyanat (IPDI) vorgelegt. Unter Rühren wurden 2,60 g (27,05 mmol) 3,5-Dimethylpyrazol zugegeben und vermischt, bis eine homogene Lösung entstand. Die Mischung wurde auf 40 °C erhitzt und nach Erreichen eines konstanten NCO-Gehalts anschließend unter Vakuumdestillation vom Lösemittel befreit.

### Herstellung der Kern-Schale-Partikel

**Wasserphase:**

| | |
|---|---|
| 530,75 g | Wasser |
| 80,20 g | Polyvinylalkohol Lösung (12,5 Gew.-%, 88%ig verseift, mittleres Molgewicht 128000 g/mol) |

**Ölphase:**

| | |
|---|---|
| 286,22 g | Parafol 18-97 |
| 37,50 g | Methylmethacrylat |
| 16,55 g | Laromer TMPTA |
| 0,49 g | Laurylmercaptan |
| 1,00 g | WAKO V-65B |

**Wässriger Initiator:**

| | |
|---|---|
| 4,97 g | Wasser |
| 0,99 g | WAKO VA-044 |

**Isocyanat:**

| | |
|---|---|
| 12,71 g | 30 % teilblockiertes Desmodur I |

**Polyamin:**

| | |
|---|---|
| 6,23 g | 10 %ige Heavy Polyamin XE Lösung |

**Stabilisierung:**

| | |
|---|---|
| 2,95 g | Lutensit A-BO |
| 3,00 g | Strodex PK-90 |
| 3,84 g | Silfoam SE 47 |
| 10,97 g | Rohagit SD 15 |
| 1,63 g | Natronlauge (50 %ig) |

In einem Becherglas wurden Wasser sowie das Schutzkolloid vorgelegt und auf 40 °C unter Rühren erhitzt. Separat wurde die Ölphase geschmolzen und vorgemischt und dann unter Rühren in die Wasserphase eingebracht. Daraufhin wurde die Emulsion für 5 min mit einem Rotor-Stator-Homogenisator geschert. Die warme Emulsion wurde in einen Kolben überführt, bei 40 °C temperiert, konstant über einen Propellerrührer gerührt und dabei wurde die Reaktionsmischung mit Stickstoff durchspült. Nach Austausch der Atmosphäre gegen Stickstoff wurde das Reaktionsgefäß mit einem Druckausgleich verschlossen und unter Rühren auf 60 °C erhitzt. Auf 60 °C für 20 min gehalten, dann auf 65 °C erhitzt, wiederum für 20 min gehalten und abschließend auf 70 °C erhitzt und für 60 min gehalten. Nach dieser Zeit wurde eine wässrige Lösung des wässrigen Initiators zur entstandenen Dispersion unter Schutzgas zugegeben und erneut 60 min nachgerührt.

In diese Suspension wurde das teilblockierte Polyisocyanat getropft und eingerührt. Anschließend wurde das Polyamin tropfenweise zugegeben und die Temperatur auf 80 °C erhöht. Nach 2 h Reaktionszeit wurde die Dispersion auf Raumtemperatur abgekühlt, mit Emulgatoren, Entschäumer sowie Verdickungsmittel abgemischt sowie mit Natronlauge auf pH 8,5 eingestellt. Es wurde eine Dispersion mit ca. 34 % Feststoffgehalt erhalten.

### Ausführungsbeispiel - 2

### Teilblockierung von Isocyanatgruppen

In einem Rundkolben wurde unter Stickstoffatmosphäre 40,00 g Isopropylacetat und 12,00 g (44,98 mmol) Isophorondiisocyanat (IPDI) vorgelegt. Unter Rühren wurden 10,80 g (10,80 mmol) Jeffamine M1000 zugegeben und vermischt, bis eine homogene Lösung entstand. Die Mischung wurde auf 50 °C erhitzt und nach Erreichen eines konstanten NCO-Gehalts anschließend unter Vakuumdestillation vom Lösemittel befreit.

### Herstellung der Kern-Schale-Partikel

**Wasserphase:**

| | |
|---|---|
| 488,93 g | Wasser |
| 71,17 g | Polyvinylalkohol Lösung (12,5 Gew.-%, 88%ig verseift, mittleres Molgewicht 128000 g/mol) |

**Ölphase:**

| | |
|---|---|
| 279,39 g | Parafol 18-97 |
| 39,89 g | Methylmethacrylat |
| 17,66 g | Laromer TMPTA |
| 0,46 g | Laurylmercaptan |
| 0,92 g | WAKO V-65B |

**Wässriger Initiator:**

| | |
|---|---|
| 4,57 g | Wasser |
| 0,96 g | WAKO VA-044 |

**Isocyanat:**

| | |
|---|---|
| 20,38 g | 10 % teilfunktionalisiertes Desmodur I |

**Polyamin:**

| | |
|---|---|
| 3,67 g | 10 %ige Heavy Polyamin XE Lösung |

**Stabilisierung:**

| | |
|---|---|
| 49,78 g | Plextol R272 |
| 3,93 g | Lutensit A-BO |
| 3,15 g | Strodex PK-90 |
| 3,54 g | Silfoam SE 47 |
| 10,10 g | Rohagit SD 15 |
| 1,50 g | Natronlauge (50 %ig) |

Die Probe wurde analog zu Beispiel 1 hergestellt. Zusätzlich wurde der Dispersion ein Bindemittel zugegeben. Es wurde eine Dispersion mit ca. 40 % Feststoffgehalt erhalten.

### Ausführungsbeispiel - 3

### Herstellung der Dispersion mit verringertem Vernetzeranteil in der kernnahen Schicht

**Wasserphase:**

| | |
|---|---|
| 439,64 g | Wasser |
| 78,65 g | Polyvinylalkohol Lösung (12,5 Gew.-%, 88%ig verseift, mittleres Molgewicht 128000 g/mol) |

**Ölphase:**

| | |
|---|---|
| 195,53 g | Parafol 18-97 |
| 35,63 g | Methylmethacrylat |
| 11,50 g | Laromer TMPTA |
| 0,41 g | Laurylmercaptan |
| 0,83 g | WAKO V-65B |

**Wässriger Initiator:**

| | |
|---|---|
| 4,11 g | Wasser |
| 0,86 g | WAKO VA-044 |

**Isocyanat:**

| | |
|---|---|
| 8,77 g | Desmodur I |

**Polyamin:**

| | |
|---|---|
| 6,74 g | 10 %ige Heavy Polyamin XE Lösung |

**Stabilisierung:**

| | |
|---|---|
| 199,06 g | Plextol R272 |
| 2,32 g | Lutensit A-BO |
| 2,34 g | Strodex PK-90 |
| 3,18 g | Silfoam SE 47 |
| 9,08 g | Rohagit SD 15 |
| 1,35 g | Natronlauge (50 %ig) |

Die Probe wurde analog zu Beispiel 1 hergestellt. Es wurde eine Dispersion mit ca. 36 % Feststoffgehalt erhalten.

Die Permeabilität der Kern-Schale-Partikel wurde über den Verlust an latenter Wärme mittels dynamischer Differenzkalorimetrie (engl. Differential Scanning Calorimetrie - DSC) bestimmt. Dafür wurde ein Latentwärmespeichermaterial umhüllt und die Dispersion in Verdünnung auf einem Textilgewebe ausgerüstet.

Ein Teil des Textils wurde bei 20 °C für 24 h getrocknet, während ein anderer Teil bei 150 °C für 3 min getrocknet wurde. Die Differenz der gemessenen Schmelzenthalpie zwischen luftgetrockneter und heißgetrockneter Probe ergibt die Dichtigkeit. Für die Nachvollziehbarkeit des Einflusses der multiplen Schichten, die zum Gesamtaufbau der Schale führen, wurde diese DSC-Methode für dieselbe Probe zu unterschiedlichen Zeitpunkten des Prozesses durchgeführt. So wurde z.B. nach Ausbildung der kernnahen Polyacrylatschicht die Permeabilität bestimmt und dann noch einmal nach Aufsetzen der kernfernen Polyurethanschicht.

| Probe | Verbliebene latente Wärme auf Textil - nur kernnahe Schicht | Verbliebene latente Wärme auf Textil - kernnahe und kernferne Schicht |
|---|---|---|
| Beispiel 1 | 91,9 % | 90,3 % |
| Beispiel 2 | 87,5 % | 93,7 % |
| Beispiel 3 | 64,5% | 63,8 % |

Die Ergebnisse zeigen, dass die Permeabilität durch die kernnahe Schicht vorgegeben wird und durch die kernferne Schicht nicht oder nur geringfügig beeinflusst wird. Die kernferne Schicht ist vorrangig für die Funktionalisierung zuständig.

Die folgenden Punkte sind Gegenstand der vorliegenden Erfindung
1. Kern-Schale-Partikel umfassend
   (a) einen Kern umfassend mindestens eine lipophile Verbindung und
   (b) eine Schale umfassend mindestens eine kernnahe Schicht und eine kernferne Schicht.
2. Kern-Schale-Partikel nach Punkt 1, wobei die kernferne Schicht auf der kernnahen Schicht angeordnet ist.
3. Kern-Schale-Partikel nach Punkt 1 oder 2, wobei die kernnahe Schicht den Kern umgibt.
4. Kern-Schale-Partikel nach einem der vorhergehenden Punkte, wobei der Kern bei Raumtemperatur (20 °C) fest ist.
5. Kern-Schale-Partikel nach einem der Punkte 1-3, wobei der Kern bei Raumtemperatur (20 °C) flüssig ist, bevorzugt als Lösung, Emulsion oder Suspension vorliegt.
6. Kern-Schale-Partikel nach einem der vorhergehenden Punkte, wobei die lipophile Verbindung bei 20 °C eine Wasserlöslichkeit von < 10 g/l, bevorzugt < 5 g/l, stärker bevorzugt < 3 g/l aufweist.
7. Kern-Schale-Partikel nach einem der vorhergehenden Punkte, wobei die lipophile Verbindung ausgewählt ist aus Pigmenten, Farbstoffen, Duftstoffen, Kosmetika, Flammschutzmitteln, Latentwärmespeichermaterialien, Bioziden, Katalysatoren, Klebstoffen, Klebstoffkomponenten, Hydrophobiermitteln, Polymerbausteinen, Isocyanaten, Ölen, Silikonölen, Wachsen oder Mischungen davon.
8. Kern-Schale-Partikel nach Punkt 7, wobei das Latentwärmespeichermaterial ausgewählt ist aus
   - gesättigtem oder ungesättigtem, linearem, verzweigtem oder zyklischem Kohlenwasserstoff, bevorzugt gesättigtem oder ungesättigtem, linearem, verzweigtem oder zyklischem C₁₀-C₄₀-Kohlenwasserstoff, stärker bevorzugt linearem oder zyklischem C₁₀-C₄₀-Alkan und aromatischem C₆-C₂₀ Kohlenwasserstoff, am stärksten bevorzugt n-Hexadecan, n-Heptadecan, n-Octadecan, n-Nonadecan, n-Eicosan, Cyclohexan, Cyclooctan, Cyclodecan, Benzol, Naphthalin, Biphenyl,
   - gesättigter oder ungesättigter C₆-C₃₀-Fettsäure, gesättigtem oder ungesättigtem C₆-C₃₀-Fettalkohol und gesättigtem oder ungesättigtem C₆-C₃₀-Fettsäure-C₁-C₁₀-Alkyl-ester, bevorzugt Laurin-, Stearin-, Öl- oder Behensäure, Lauryl-, Stearyl- oder Oleylalkohol, Propylpalmitat, Methylstearat oder Methylpalmitat, und
   - Mischungen davon.
9. Kern-Schale-Partikel nach Punkt 7, wobei der Farbstoff ausgewählt ist aus Reaktivfarbstoff, wie z.B. C.I. Reactive Red 2, Dispersionsfarbstoff, wie z.B. C.I. Disperse Yellow 42, Säurefarbstoff, wie z.B. C.I. Acid Blue 1, oder basischem Farbstoff, wie z.B. C.I. Basic Violet 3, und Mischungen davon.
10. Kern-Schale-Partikel nach Punkt 7, wobei die Pigmente ausgewählt sind aus organischen oder anorganischen Pigmenten, insbesondere Farbpigmenten, magnetischen Pigmenten, und Mischungen davon.
11. Kern-Schale-Partikel nach Punkt 7, wobei die Duftstoffe ausgewählt sind aus synthetischen oder natürlichen Duftstoffen.
12. Kern-Schale-Partikel nach Punkt 7, wobei die Flammschutzmittel halogenierte Flammschutzmittel, bevorzugt Tetrabromobisphenol A (TBA), Bromopolystyrol, chlorierte Paraffine und Dibromoneopentylglycol (DBNPG), phosphathaltige Flammschutzmittel, bevorzugt organische Phosphorsäureester oder cyclische Phosphatderivate, oder Mischungen davon sind.
13. Kern-Schale-Partikel nach Punkt 7, wobei die Biozide ausgewählt sind aus Pestiziden, Fungiziden, Herbiziden, Insektiziden, Algiziden, Molluskiziden, Akariziden, Rodentiziden, Bakteriziden, Antibiotika, Antiseptika, antibakteriellen, antiviralen, antifungalen, antiparasitären Bioziden und Mischungen davon.
14. Kern-Schale-Partikel nach Punkt 7, wobei die Kosmetika ausgewählt sind aus Antifaltenmitteln, Radikalfängern, Selbstbräunern und Massageölen.
15. Kern-Schale-Partikel nach einem der vorhergehenden Punkte, wobei die kernnahe Schicht erhältlich ist durch Polymerisation von mindestens einem Monomer mit mindestens einer ethylenisch ungesättigten Gruppe.
16. Kern-Schale-Partikel nach Punkt 15, wobei das Monomer mit mindestens einer ethylenisch ungesättigten Gruppe keine nukleophile Gruppe mit aktivem Wasserstoffatom, insbesondere keinen NCO-reaktiven Wasserstoff, aufweist.
17. Kern-Schale-Partikel nach Punkt 15 oder 16, wobei die kernnahe Schicht erhältlich ist durch radikalische Polymerisation.
18. Kern-Schale-Partikel nach einem der Punkte 15-17, wobei die ethylenisch ungesättigte Gruppe eine Vinyl-, Vinylether-, Acryl-, C₁₋₆-Alkylacryl-, Allyl- und/oder Allylether-Gruppe ist.
19. Kern-Schale-Partikel nach einem der Punkte 15-18, wobei das Monomer mit mindestens einer ethylenisch ungesättigten Gruppe die Struktur aufweist: 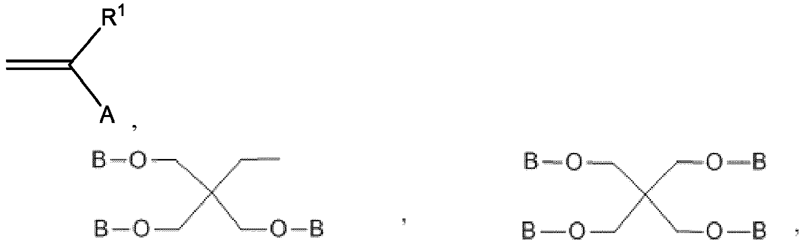 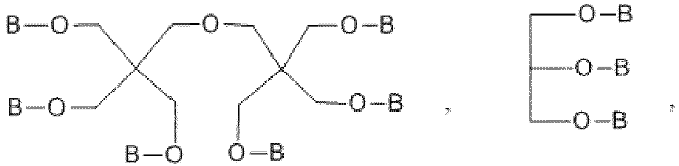 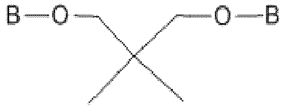 mit 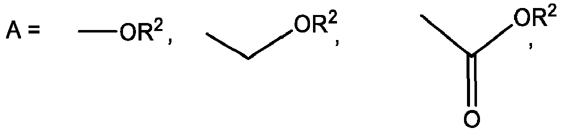 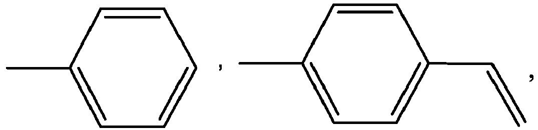 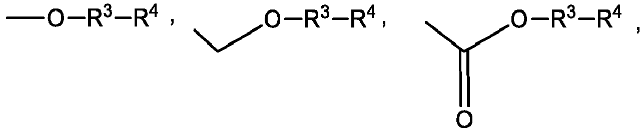 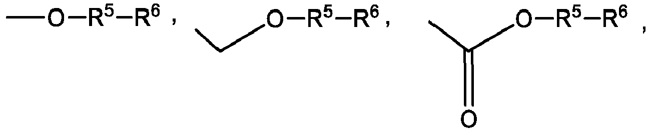 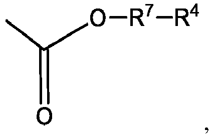
   **B = -R⁵-R⁶**
   R¹ = -C₁-C₆-Alkyl oder -H, bevorzugt -H oder -CH₃,
   R² = lineares oder verzweigtes C₁-C₂₄-Alkyl,
   R³ = lineares oder verzweigtes C₁-C₂₄-Alkylen, 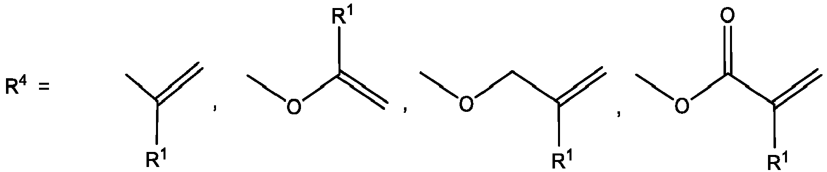 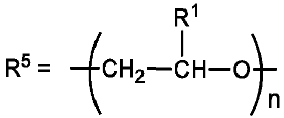 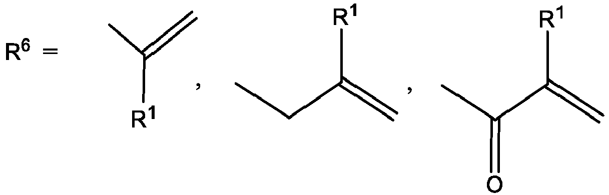
   R⁷ = Polyester, insbesondere erhältlich durch Reaktion von C₁-C₆-Alkyldiolen und C₁-C₆-Alkyldicarbonsäuren, wie z.B. Diester, z.B. Malonsäureester, Oxalsäureester, Bernsteinsäureester, Glutarsäureester oder Adipinsäureester und n = 0 - 20
20. Kern-Schale-Partikel nach einem der Punkte 15-19, wobei das molare Verhältnis von Monomeren mit einer ethylenisch ungesättigten Gruppe zu Monomeren mit mehreren ethylenisch ungesättigten Gruppen 2 bis 40, bevorzugt 4 bis 30, ist.
21. Kern-Schale-Partikel nach einem der vorhergehenden Punkte, wobei die kernferne Schicht mindestens eine Urethan-, Allophanat-, Carbodiimid-, Isocyanurat-, Biuret-, Uretdion-, Harnstoff-, Iminooxadiazindion- oder Uretonimingruppe enthält.
22. Kern-Schale-Partikel nach einem der vorhergehenden Punkte, wobei die kernferne Schicht ein Additionsprodukt aus mindestens einem Polyisocyanat und mindestens einer Verbindung umfassend mindestens zwei Gruppen mit NCO-reaktivem Wasserstoffatom, bevorzugt Hydroxy-, Amino-, Carbonsäure-, Urethan- und/oder Harnstoffgruppen, ist.
23. Kern-Schale-Partikel nach Punkt 22, wobei das Polyisocyanat aromatisch, alicyclisch oder aliphatisch ist, bevorzugt ausgewählt aus Methylendiphenylisocyanat (MDI), polymerem MDI, Toluylendiisocyanat (TDI), Triphenylmethan-4,4',4"-triisocyanat, 2,4,6-Triisocyanattoluol, Isophorondiisocyanat (IPDI), 4,4'-Methylenebis(cyclohexylisocyanat) (H12MDI), Methyl-2,4-cyclohexandiisocyanat, 1,3,5-Triisocyanatcyclohexan, 1,3,5-Trimethylisocyanatcyclohexan, Trimethylendiisocyanat, 1,4,8-Triisocyanatoctan, 1,3,6-Triisocyanathexan, Hexamethylendiisocyanat, Xylendiisocyanat (XDI), biurethaltigen- und isocyanurathaltigen-Polyisocyanaten.
24. Kern-Schale-Partikel nach Punkt 22 oder 23, wobei die NCO-Gruppen des Polyisocyanats zum Teil blockiert sind.
25. Kern-Schale-Partikel nach Punkt 23, wobei 0,1 bis 80 %, bevorzugt 1 bis 50 %, stärker bevorzugt 1 bis 30 % der NCO-Gruppen des Polyisocyanats blockiert sind.
26. Kern-Schale-Partikel nach einem der Punkte 22-25, wobei die Verbindung umfassend mindestens zwei Gruppen mit NCO-reaktivem Wasserstoffatom ausgewählt ist aus Polyolen, Polyesterpolyolen, Polyetherpolyolen, Polyharnstoffen, amino- und/oder hydroxyfunktionalisierten Homo- oder Copolymeren, Polyaminen und hydroxyfunktionellen Aminen.
27. Kern-Schale-Partikel nach einem der Punkte 22-26, wobei das molare Verhältnis von NCO-Gruppen zu Gruppen mit NCO-reaktivem Wasserstoffatom zwischen 1 und 100, bevorzugt 2 und 100, stärker bevorzugt 5 und 100 und noch stärker bevorzugt 5 und 80 liegt.
28. Kern-Schale-Partikel nach einem der vorhergehenden Punkte, wobei die kernferne Schicht mindestens eine funktionelle Gruppe, bevorzugt eine anionische, kationische oder nicht-ionische Gruppe, aufweist.
29. Kern-Schale-Partikel nach Punkt 28, wobei die anionische Gruppe mindestens eine Carboxylat-, Phosphat-, Phosphonat-, Sulfat- oder Sulfonat-Gruppe umfasst und bevorzugt die Formel (I) aufweist:

   -L-X Formel (I)

   wobei
   - X: SO₃⁻, SO₄⁻, COO⁻, PO₄²⁻ oder PO₃²⁻ ist, und
   - L: lineares oder verzweigtes, gesättigtes oder ungesättigtes C₁-C₁₀ Alkylen ist, das gegebenenfalls mit -OH substituiert ist.
30. Kern-Schale-Partikel nach Punkt 28, wobei die kationische funktionelle Gruppe mindestens ein quaternäres Ammoniumion oder ein Ammoniumsalz umfasst und bevorzugt die Formel (II) aufweist:

   -L-Y Formel (II)

   wobei
   Y NHR₈R₉⁺ oder NR₈R₉R₁₀⁺ ist,
   R₈, R₉ und R₁₀ jeweils unabhängig voneinander H oder lineares oder verzweigtes, gesättigtes oder ungesättigtes, C₁-C₁₀-Alkyl sind, das gegebenenfalls mit OH und/oder COOH substituiert ist und
   L wie oben definiert ist.
31. Kern-Schale-Partikel nach Punkt 28, wobei die nicht-ionische funktionelle Gruppe ein Polyalkylenoxid, bevorzugt Polyethylenoxid und/oder Polypropylenoxid, umfasst.
32. Kern-Schale-Partikel nach einem der Punkte 28-31, wobei die funktionelle Gruppe über eine Urethan-Gruppe an die kernferne Schicht gebunden ist.
33. Kern-Schale-Partikel nach einem der Punkte 27-31, wobei 0-30 %, bevorzugt 0 bis 20 %, stärker bevorzugt 0,1 bis 20 %, der NCO-Gruppen im Polyisocyanat mit einer Verbindung umfassend mindestens eine funktionelle Gruppe umgesetzt sind.
34. Zusammensetzung, umfassend mindestens einen Kern-Schale-Partikel gemäß einem der Punkte 1-33.
35. Zusammensetzung nach Punkt 34, wobei die Zusammensetzung Wasser umfasst.
36. Zusammensetzung nach Punkt 34 oder 35, wobei die Zusammensetzung ferner mindestens ein oberflächenaktives Reagenz, insbesondere Tensid, ein Bindemittel, einen Entschäumer, ein Schutzkolloid und/oder ein Verdickungsmittel enthält.
37. Zusammensetzung nach Punkt 36, wobei das Bindemittel ein Polymer mit einer Glasübergangstemperatur im Bereich von -45 bis +45 °C, insbesondere ein Polymer auf Basis von (Meth)Acrylsäureester, Styrol, Isopren, Butadien, Vinylacetat, und/oder Isocayanat, ist.
38. Zusammensetzung nach einem der Punkte 34-37, wobei der Entschäumer ein Mineralöl, eine Kieselsäure oder ein siliconhaltiger Entschäumer ist.
39. Zusammensetzung nach einem der Punkte 34-38, wobei die Kern-Schale-Partikel gemäß den Punkten 1-33 10 bis 55 Gew.-%, bevorzugt 15 bis 45 Gew.-%, besonders bevorzugt 20 bis 37,5 Gew.-% bezogen auf die Gesamtmasse der Zusammensetzung, ausmachen.
40. Verfahren zur Herstellung eines Kern-Schale-Partikels nach einem der Punkte 1-33 oder einer Zusammensetzung nach einem der Punkte 34-39, umfassend die Schritte:
   (i) Bereitstellen mindestens einer lipophilen Verbindung, ggf. aufgeschlämmt in einem Trägeröl,
   (ii) Mischen der mindestens einen lipophilen Verbindung und ggf. des Trägeröls mit
      - mindestens einem Monomer mit mindestens einer ethylenisch ungesättigten Gruppe,
      - Wasser,
      - mindestens einem Polymerisationsinitiator,
      - mindestens einem Schutzkolloid,
      - gegebenenfalls mindestens einem oberflächenaktiven Reagenz,
      - gegebenenfalls mindestens einem Kettenregler, unter Bildung einer Emulsion, in der das Wasser die kontinuierliche Phase bildet.
   (iii) Behandeln der in (ii) erhaltenen Emulsion bei erhöhter Temperatur unter Rühren,
   (iv) Zugeben mindestens eines, gegebenenfalls teilblockierten, Polyisocyanats und mindestens einer Verbindung umfassend mindestens zwei Gruppen mit NCO-reaktivem Wasserstoffatom, und ggf. Zugeben mindestens einer Verbindung umfassend mindestens eine funktionelle Gruppe und ein NCO-reaktives Wasserstoffatom,
   (v) gegebenenfalls Behandeln der in (iv) erhaltenen Mischung bei erhöhter Temperatur,
   (vi) gegebenenfalls Zugeben mindestens eines Bindemittels, Entschäumers, oberflächenaktiven Reagenz und/oder eines Verdickungsmittels, und
   (vii) gegebenenfalls zumindest teilweises Entfernen des Wassers.
41. Verfahren nach Punkt 40, wobei die disperse Phase einen Durchmesser D₅₀ von 0,1 bis 100 µm, bevorzugt 0,5 bis 80 µm und stärker bevorzugt 1 bis 75 µm aufweist.
42. Verfahren nach Punkt 40 oder 41, wobei das Schutzkolloid ausgewählt ist aus wasserlöslichem Polymer, insbesondere Polyvinylalkohol, Cellulosederivaten, insbesondere Hydroxyalkylcellulose oder Carboxyalkylcellulose, Gummi Arabicum, Polyacrylsäure, Polyacrylamiden, Polyvinylpyrrolidon und/oder Maleinsäureanhydrid-Copolymeren.
43. Verfahren nach einem der Punkte 40-42, wobei das oberflächenaktive Reagenz ausgewählt ist aus anionischen, kationischen oder nicht-ionischen Tensiden.
44. Verfahren nach einem der Punkte 40-43, wobei der Polymerisationsinitiator ein radikalischer Initiator, insbesondere ein Peroxid, eine Azoverbindung, ein Persulfat, ein Hydroperoxid und/oder ein Redoxinitiator, oder Mischungen davon ist.
45. Verfahren nach einem der Punkte 40-44, wobei der Kettenregler eine schwefelhaltige Verbindung, insbesondere Laurylmercaptan oder Ethylhexylthioglycolat, ist.
46. Verfahren nach einem der Punkte 40-45, wobei der Lösungsvermittler Mono-, Di- oder Triglycerid, Mineralöl, Silikonöl, Rizinusöl und/oder Isopropylmyristat ist.
47. Verfahren nach einem der Punkte 40-46, wobei Schritt (iii) bei Temperaturen von 25 bis 100 °C, bevorzugt 50 bis 100 °C, erfolgt.
48. Verfahren nach einem der Punkte 40-47, wobei Schritt (iv) bei Temperaturen von 25 bis 100 °C, bevorzugt 50 bis 100 °C erfolgt.
49. Verfahren nach einem der Punkte 40-48, wobei Schritt (v) bevorzugt für 0,25 bis 4 Stunden, bevorzugt bei Temperaturen von 25 bis 100 °C, bevorzugt 30 bis 90 °C, durchgeführt wird.
50. Kern-Schale-Partikel erhältlich nach einem Verfahren gemäß den Punkten 40-49.
51. Verwendung der Kern-Schale-Partikel nach einem der Punkte 1-33 oder 50 oder der Zusammensetzung nach einem der Punkte 34-39 zur Funktionalisierung von Flächengebilden, insbesondere Fasern, textilen Flächengeweben, Baustoffen, Kunststoffen oder Kunststoffschäumen, Farben und Lacken.
52. Verfahren zur Ausrüstung von Flächengebilden, insbesondere von Textilien, umfassend die Schritte
   (a) Bereitstellen der Kern-Schale-Partikel nach einem der Punkte 1-33 oder 50 oder der Zusammensetzung nach einem der Punkte 34-39,
   (b) Aufbringen der Kern-Schale-Partikel oder Zusammensetzung auf ein Flächengebilde; und
   (c) thermisches Behandeln des Flächengebildes.
53. Flächengebilde, insbesondere Fasern oder textile Flächengebilde, umfassend Kern-Schale-Partikel nach einem der Punkte 1-33 oder 50 oder die Zusammensetzung nach einem der Punkte 34-39.

## Patentansprüche

1. Kern-Schale-Partikel umfassend
(a) einen Kern umfassend mindestens eine lipophile Verbindung und
(b) eine Schale umfassend mindestens eine kernnahe Schicht und eine kernferne Schicht.

2. Kern-Schale-Partikel nach Anspruch 1, wobei die kernferne Schicht auf der kernnahen Schicht angeordnet ist.

3. Kern-Schale-Partikel nach einem der vorhergehenden Ansprüche, wobei die lipophile Verbindung ausgewählt ist aus Pigmenten, Farbstoffen, Duftstoffen, Kosmetika, Flammschutzmitteln, Latentwärmespeichermaterialien, Bioziden, Katalysatoren, Klebstoffen, Klebstoffkomponenten, Hydrophobiermitteln, Polymerbausteinen, Isocyanaten, Ölen, Silikonölen, Wachsen oder Mischungen davon.

4. Kern-Schale-Partikel nach einem der vorhergehenden Ansprüche, wobei die kernnahe Schicht erhältlich ist durch Polymerisation von mindestens einem Monomer mit mindestens einer ethylenisch ungesättigten Gruppe, bevorzugt mit der Struktur: 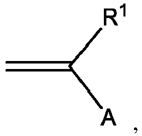 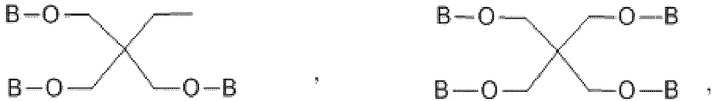 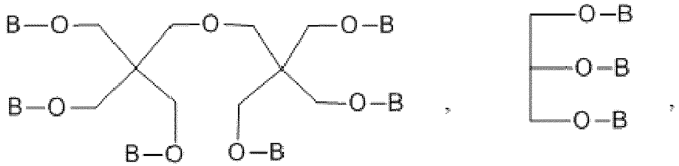 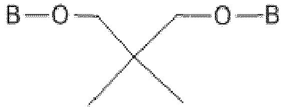 mit 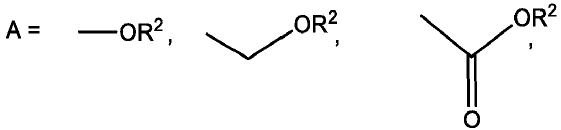 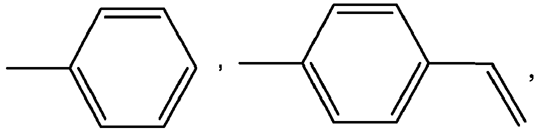 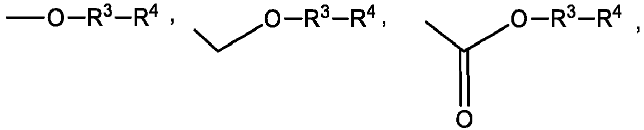 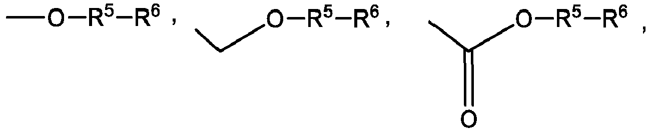 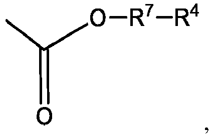
**B = -R⁵-R⁶**
R¹ = -C₁-C₆-Alkyl oder -H, bevorzugt -H oder -CH₃,
R² = lineares oder verzweigtes C₁-C₂₄-Alkyl,
R³ = lineares oder verzweigtes C₁-C₂₄-Alkylen, 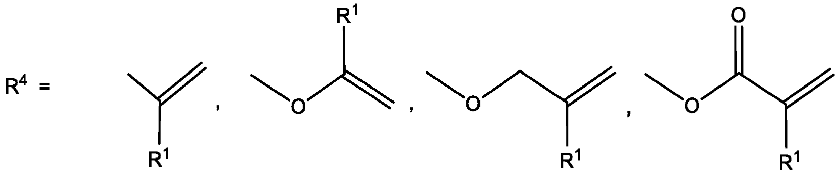 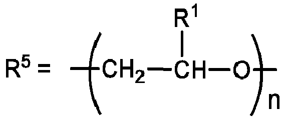 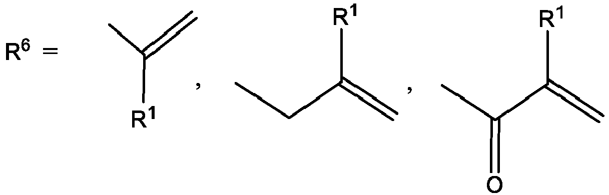
R⁷ = Polyester, insbesondere erhältlich durch Reaktion von C₁-C₆-Alkyldiolen und C₁-C₆-Alkyldicarbonsäuren, wie z.B. Diester, z.B. Malonsäureester, Oxalsäureester, Bernsteinsäureester, Glutarsäureester oder Adipinsäureester und
n = 0 - 20

5. Kern-Schale-Partikel nach einem der vorhergehenden Ansprüche, wobei die kernferne Schicht mindestens eine Urethan-, Allophanat-, Carbodiimid-, Isocyanurat-, Biuret-, Uretdion-, Harnstoff-, Iminooxadiazindion- oder Uretonimingruppe enthält.

6. Kern-Schale-Partikel nach einem der vorhergehenden Ansprüche, wobei die kernferne Schicht ein Additionsprodukt aus mindestens einem Polyisocyanat und mindestens einer Verbindung umfassend mindestens zwei Gruppen mit NCO-reaktivem Wasserstoffatom, bevorzugt Hydroxy-, Amino-, Carbonsäure-, Urethan- und/oder Harnstoffgruppen, ist.

7. Kern-Schale-Partikel nach Anspruch 6, wobei die NCO-Gruppen des Polyisocyanats zum Teil blockiert sind, insbesondere 0,1 bis 80 %, bevorzugt 1 bis 50 %, stärker bevorzugt 1 bis 30 % der NCO-Gruppen des Polyisocyanats blockiert sind.

8. Kern-Schale-Partikel nach einem der vorhergehenden Ansprüche, wobei die kernferne Schicht mindestens eine funktionelle Gruppe, bevorzugt eine anionische, kationische oder nicht-ionische Gruppe, aufweist, die bevorzugt über eine Urethan-Gruppe an die kernferne Schicht gebunden ist.

9. Zusammensetzung, umfassend mindestens einen Kern-Schale-Partikel gemäß einem der Ansprüche 1-8.

10. Zusammensetzung nach Anspruch 9, wobei die Zusammensetzung Wasser umfasst und ggf. ferner mindestens ein oberflächenaktives Reagenz, insbesondere Tensid, ein Bindemittel, einen Entschäumer, ein Schutzkolloid und/oder ein Verdickungsmittel enthält.

11. Verfahren zur Herstellung eines Kern-Schale-Partikels nach einem der Ansprüche 1-8 oder einer Zusammensetzung nach einem der Ansprüche 9 oder 10, umfassend die Schritte:
(i) Bereitstellen mindestens einer lipophilen Verbindung, ggf. aufgeschlämmt in einem Trägeröl,
(ii) Mischen der mindestens einen lipophilen Verbindung und ggf. des Trägeröls mit
- mindestens einem Monomer mit mindestens einer ethylenisch ungesättigten Gruppe,
- Wasser,
- mindestens einem Polymerisationsinitiator,
- mindestens einem Schutzkolloid,
- gegebenenfalls mindestens einem oberflächenaktiven Reagenz,
- gegebenenfalls mindestens einem Kettenregler, unter Bildung einer Emulsion, in der das Wasser die kontinuierliche Phase bildet.
(iii) Behandeln der in (ii) erhaltenen Emulsion bei erhöhter Temperatur unter Rühren,
(iv) Zugeben mindestens eines, gegebenenfalls teilblockierten, Polyisocyanats und mindestens einer Verbindung umfassend mindestens zwei Gruppen mit NCO-reaktivem Wasserstoffatom, und ggf. Zugeben mindestens einer Verbindung umfassend mindestens eine funktionelle Gruppe und ein NCO-reaktives Wasserstoffatom,
(v) gegebenenfalls Behandeln der in (iv) erhaltenen Mischung bei erhöhter Temperatur,
(vi) gegebenenfalls Zugeben mindestens eines Bindemittels, Entschäumers, oberflächenaktiven Reagenz und/oder eines Verdickungsmittels, und
(vii) gegebenenfalls zumindest teilweises Entfernen des Wassers.

12. Kern-Schale-Partikel erhältlich nach einem Verfahren gemäß Anspruch 11.

13. Verwendung der Kern-Schale-Partikel nach einem der Ansprüche 1-8 oder 12 oder der Zusammensetzung nach einem der Ansprüche 9 oder 10 zur Funktionalisierung von Flächengebilden, insbesondere Fasern, textilen Flächengeweben, Baustoffen, Kunststoffen oder Kunststoffschäumen, Farben und Lacken.

14. Verfahren zur Ausrüstung von Flächengebilden, insbesondere von Textilien, umfassend die Schritte
(a) Bereitstellen der Kern-Schale-Partikel nach einem der Ansprüche 1-8 oder 12 oder der Zusammensetzung nach einem der Ansprüche 9 oder 10,
(b) Aufbringen der Kern-Schale-Partikel oder Zusammensetzung auf ein Flächengebilde; und
(c) thermisches Behandeln des Flächengebildes.

15. Flächengebilde, insbesondere Fasern oder textile Flächengebilde, umfassend Kern-Schale-Partikel nach einem der Ansprüche 1-8 oder 12 oder die Zusammensetzung nach einem der Ansprüche 9 oder 10.
